# EUROPEAN PATENT APPLICATION

(11) **EP 4 357 897 A1**
(43) Date of publication of application: **24.04.2024**
(21) Application number: 23761747.7
(22) Date of filing: 06.09.2023
(51) Int. Cl.: G06F 3/0484, G06F 3/0481, G06F 3/041, H04M 1/72445

(54) **ELECTRONIC DEVICE FOR ADJUSTING DISPLAY MAGNIFICATION OF IMAGE AND TEXT AND DISPLAYING SAME, AND CONTROL METHOD THEREFOR**

(30) Priority: 06.09.2022 KR 20220112629; 12.10.2022 KR 20220130658
(71) Applicant: Samsung Electronics Co., Ltd., Suwon-si, Gyeonggi-do 16677 (KR)
(72) Inventor: LEE, Younsun, Suwon-si, Gyeonggi-do 16677 (KR); KIM, Juyoung, Suwon-si, Gyeonggi-do 16677 (KR); KIM, Changhwan, Suwon-si, Gyeonggi-do 16677 (KR); MOON, Hyunjung, Suwon-si, Gyeonggi-do 16677 (KR); BAE, Sungchan, Suwon-si, Gyeonggi-do 16677 (KR)
(74) Representative: HGF
(86) International application number: PCT/KR2023/013370
(87) International publication number: WO 2024/054043

(57) **Abstract**

Disclosed are an electronic device for displaying an image and text by adjusting display magnification thereof, and a control method thereof. An electronic device according to an embodiment of this document may include a touch screen display, a communication circuit, and at least one processor, wherein the at least one processor may be configured to display a first execution screen of a first application according to a first magnification on the touch screen display, the first execution screen comprising at least one image and at least one text, obtain a user input to the electronic device while the first execution screen is being displayed on the touch screen display, based on obtaining the user input, obtain information about a second execution screen of the first application, wherein the second execution screen corresponds to the first execution screen changed to a second magnification from the first magnification, from an external electronic device operatively connected to the electronic device through the communication circuit, and display through the touch screen display, a third execution screen that corresponds to the second execution screen in which a display magnification of at least one of the at least one image and at least one text is adjusted from the second magnification.

## Description

### [Technical Field]

This document relates to an electronic device for displaying images and text by adjusting display magnification thereof and a method for controlling the same.

### [Background Art]

The various services and additional functions provided through electronic devices, which, by way of example, may include portable electronic devices such as smartphones, are gradually increasing. As such in order to increase the utility value of these electronic devices and satisfy various needs of users, communication service providers or electronic device manufacturers are competitively developing these electronic devices to provide various functions and to differentiate themselves from other companies. Accordingly, various functions provided through these electronic devices are becoming enhanced.

### [Detailed Description of the Invention]

### [Technical Problem]

Such electronic devices may also include foldable devices (e.g. an electronic device comprising a flexible display). Foldable devices, e.g. when unfolded, may have similar horizontal and vertical ratios (or proportions) of a display (e.g., a flexible display). In other words, the proportions (or size) of the horizontal and vertical lengths of the display area of the foldable device, may be broadly similar. In particular, these proportions may be different to the size of a sub-display of the device (in examples, a sub-display being a display which may be provided on an opposite surface to a flexible display of a foldable device, on one housing part of a foldable device). It will also be appreciated that the below considerations may apply to any electronic device having a display having a viewing (or display) area, which may expand and reduce in size, such as a device with a rollable display or an expandable display. In such examples, a sub-display may correspond to the display prior to expansion (e.g. unexpanded), and a main display may correspond to the display after expansion (or during expansion, or in an intermediate state of expansion).

For example, when web content is provided through the described display area of the foldable device (or any of the devices listed above), and the horizontal and vertical ratios (or proportions) of the display are similar, an image included in the website occupies (e.g. may be set to occupy) most of the horizontal width of the screen of the foldable device (e.g., a display area of a touch screen display). Therefore, a relatively small amount of web content other than the displayed image, (for example, text), may be provided to users of the device despite the screen having a larger area than those of other portable terminals (e.g., non-foldable electronic devices, or other smartphones).

It is an aim of embodiments of this document to solve, address or mitigate the technical problems described above. However, such technical problems are not limited to those described above, and other technical problems not mentioned herein will be clearly understood by those having ordinary knowledge in the art regarding the present disclosure, from the following description.

### [Technical Solution]

According to an embodiment of this document, an electronic device enabling an execution screen to include a larger amount of content, if at least one image included in web content occupies the screen by a specified ratio or more, by adjusting the sizes of the image and text may be provided.

According to an embodiment of this document, a method of controlling an electronic device, which is capable of including a larger amount of content in an execution screen, if at least one image included in web content occupies the screen by a specified ratio or more, by adjusting the sizes of the image and text, may be provided.

An electronic device according to an embodiment of this document may include a touch screen display, a communication circuit, and at least one processor, wherein the at least one processor may be configured to display a first execution screen of a first application according to a first magnification on the touch screen display, the first execution screen comprising at least one image and at least one text, obtain a user input to the electronic device while the first execution screen is being displayed on the touch screen display, based on obtaining the user input, obtain information about a second execution screen of the first application, wherein the second execution screen corresponds to the first execution screen changed to a second magnification from the first magnification, from an external electronic device operatively connected to the electronic device through the communication circuit, and display through the touch screen display, a third execution screen that corresponds to the second execution screen in which a display magnification of at least one of the at least one image and at least one text is adjusted from the second magnification.

A method for controlling an electronic device according to an embodiment of this document may include displaying a first execution screen of a first application according to a first magnification on a touch screen display of the electronic device, the first execution screen comprising at least one image and at least one text, obtaining a user input to the electronic device while the first execution screen is being displayed on the touch screen display, based on obtaining the user input, obtaining information about a second execution screen of the first application, the second execution screen corresponds to the first execution screen changed a second magnification from the first magnification, from an external electronic device operatively connected to the electronic device through a communication circuit of the electronic device, and displaying, , through the touch screen display, a third execution screen that corresponds to the second execution screen in which a display magnification of at least one of the at least one image and at least one text is adjusted from the second magnification.

### [Advantageous Effects]

According to an embodiment of this document, it is possible to provide an electronic device capable of including a larger amount of content in an execution screen , if at least one image included in web content occupies the screen by a specified ratio or more, by adjusting the sizes of the image and text. In an example, it is possible to provide a larger amount of content (e.g. at least one image and/or text) of a webpage, by adjusting a size (or magnification) of at least one of the content (e.g. the at least one image and/or text), such that a larger amount of content is available to view (e.g. on a display area of a foldable device).

Effects according to an embodiment of this document are not limited to the effect described above, and it is apparent to those skilled in the art that various effects are inherent in the disclosure.

### [Brief Description of Drawings]

FIG. 1 is a block diagram of an electronic device in a network environment according to various embodiments.
FIG. 2 is a diagram illustrating an unfolded state of an electronic device according to an embodiment of this document.
FIG. 3 is a diagram illustrating a folded state of an electronic device according to an embodiment of this document.
FIG. 4 is a diagram illustrating an example in which at least one image included in web content (e.g., an execution screen of an internet application) occupies most of a screen (e.g., a display area of a touch screen display) according to the prior art.
FIG. 5 is an exemplary diagram illustrating a function or operation in which an electronic device adjusts the size of at least one image and/or at least one text included in web content and displays the web content according to an embodiment of this document.
FIGS. 6A and 6B are exemplary diagrams illustrating a function or operation in which an electronic device identifies the size of at least one image included in web content according to an embodiment of this document.
FIG. 6C is an exemplary diagram illustrating a function or operation in which an electronic device displays a first visual object for adjusting display magnification of at least one image and/or at least one text and displaying the same in the case where the size of at least one image included in web content exceeds a specified size according to an embodiment of this document.
FIG. 6D is an exemplary diagram illustrating a function or operation in which an electronic device obtains information about at least one image and at least one text whose display magnification is adjusted from an external electronic device (e.g., a server) and produces a web page based on the obtained information according to an embodiment of this document.
FIG. 6E is an exemplary diagram illustrating a function or operation in which an electronic device changes only the size of at least one text among at least one image and at least one text included in a produce web page and displays a web page according to an embodiment of this document.
FIG. 7 is an exemplary diagram illustrating a function or operation in which an electronic device, based on whether or not web page display information configured for a current domain is stored, displays a pop-up window for configuring the web page display information or displays an application execution screen (e.g., a web page) according to the stored web page display information according to an embodiment of this document.
FIG. 8A is an exemplary diagram illustrating a function or operation in which an electronic device displays a pop-up window for configuring web page display information according to an embodiment of this document.
FIG. 8B is an exemplary diagram illustrating a function or operation in which an electronic device displays an indicator indicating that a currently displayed screen is a screen whose screen display magnification has been changed according to an embodiment of this document.
FIG. 9 is an exemplary diagram illustrating a function or operation of configuring web page display information according to a user input to a pop-up window according to an embodiment of this document.
FIGS. 10A and 10B are exemplary diagrams illustrating the function or operation described in relation to FIG. 9 in terms of a user interface.
FIG. 11 is an exemplary diagram illustrating a function or operation in which an electronic device configures web page display information through an extended pop-up window according to an embodiment of this document.
FIGS. 12A, 12B, 12C, and 12D are exemplary diagrams illustrating the function or operation described in relation to FIG. 11 in terms of a user interface.
FIG. 13 is an exemplary diagram illustrating a function or operation of changing display magnification of an image and text and displaying the same according to a user input to a visual object for configuring configuration information of a web page according to an embodiment of this document.
FIGS. 14A, 14B, and 14C are exemplary diagrams illustrating the function or operation described in relation to FIG. 13 in terms of a user interface.
FIGS. 15A, 15B, and 15C are exemplary diagrams illustrating various embodiments in which a pop-up window is controlled according to a user input according to an embodiment of this document.
FIG. 16 is an exemplary diagram illustrating a function or operation in which an electronic device displays a current web page according to pre-stored configuration information according to an embodiment of this document.
FIGS. 17A, 17B, 17C, and 17D are exemplary diagrams illustrating the function or operation described in relation to FIG. 16 in terms of a user interface.
FIG. 18 is an exemplary diagram illustrating a function or operation in which an electronic device displays a pop-up window according to a user selection input to an indicator according to an embodiment of this document.
FIGS. 19A, 19B, and 19C are exemplary diagrams illustrating the function or operation described in relation to FIG. 18 in terms of a user interface.
FIG. 20 is an exemplary diagram illustrating a function or operation of at least temporarily changing configuration information of a web page and displaying a web page according to an embodiment of this document.
FIGS. 21A, 21B, and 21C are exemplary diagrams illustrating the function or operation described in relation to FIG. 20 in terms of a user interface.
FIG. 22 is an exemplary diagram illustrating a function or operation of recommending configuration information more suitable for a current web page from among a plurality of pieces of configuration information according to an embodiment of this document.
FIGS. 23A, 23B, and 23C are exemplary diagrams illustrating the function or operation described in relation to FIG. 22 in terms of a user interface.
FIGS. 24A and 24B are exemplary diagrams illustrating a function or operation of configuring a web page optimization method for each tab according to an embodiment of this document.

### [Mode for Carrying out the Invention]

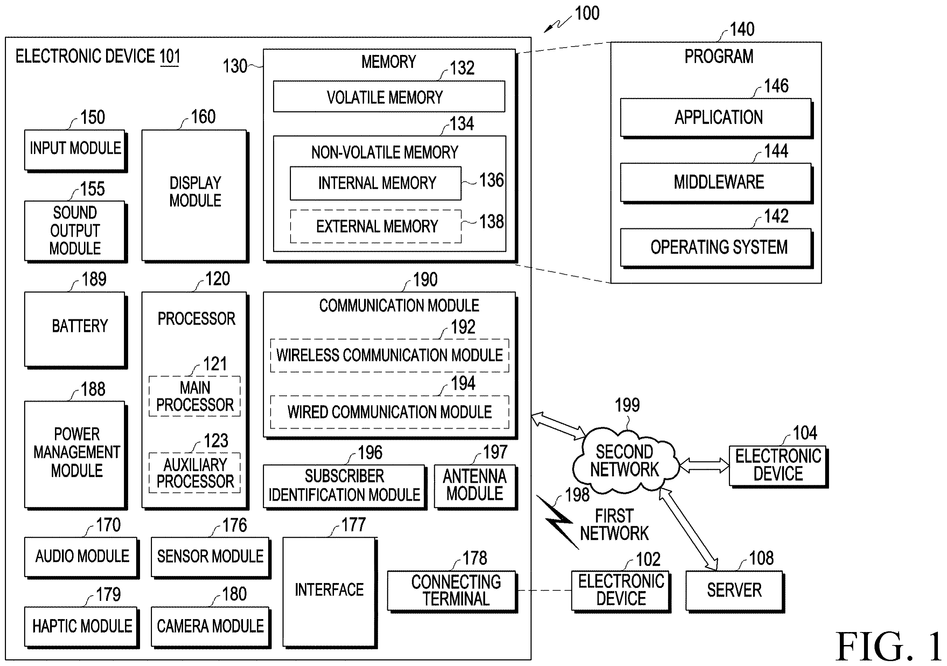

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

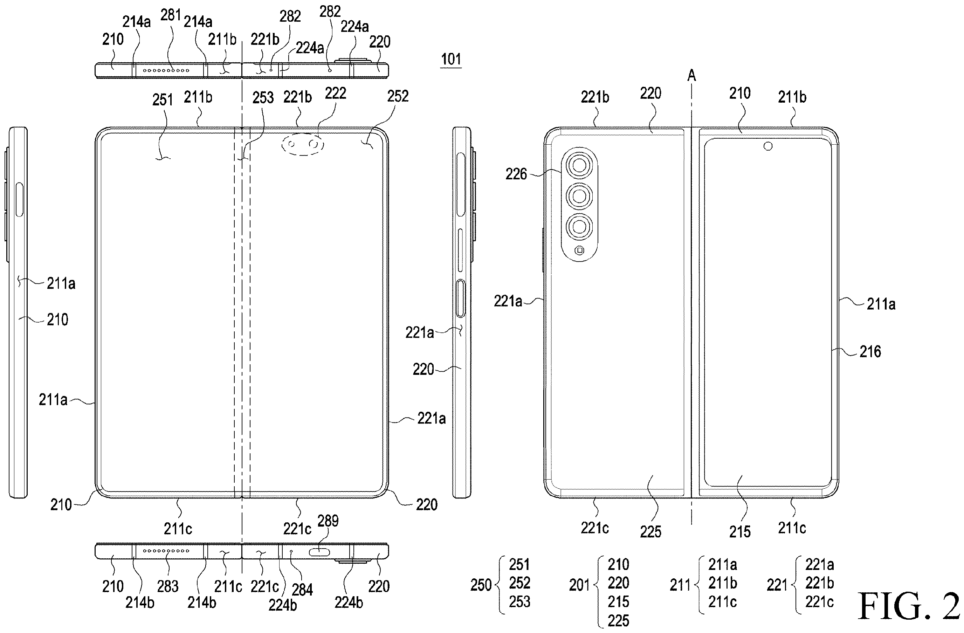

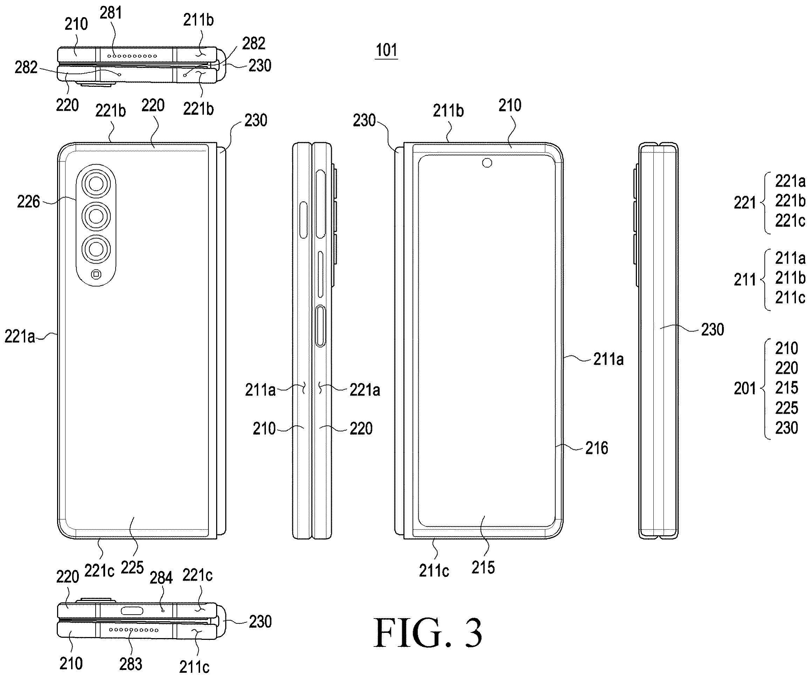

FIG. 2 is a diagram illustrating an unfolded state of an electronic device according to an embodiment of the disclosure. FIG. 3 is a diagram illustrating a folded state of an electronic device according to an embodiment of the disclosure.

FIG. 2 is a diagram illustrating an unfolded state of folding states of an electronic device (or a foldable electronic device) according to an embodiment of the disclosure. FIG. 3 is a diagram illustrating a folded state of an electronic device (or a foldable electronic device) according to an embodiment of the disclosure. The electronic device 101 in FIGS. 2 to 3 is an example of the electronic device 101 shown in FIG. 1 and may also be termed a foldable or bendable electronic device.

The configuration of the electronic device 101 in FIGS. 2 to 3 may be partially or entirely the same as that of the electronic device 101 in FIG. 1.

Referring to FIG. 2 and 3, in an embodiment, the electronic device 101 may include a foldable housing 201 and a flexible or foldable display 250 (hereinafter referred to as a "flexible display" 250 for brevity) (e.g., the display module 160 in FIG. 1) disposed in a space formed by the foldable housing 201. According to an embodiment, a surface on which the flexible display 250 is disposed (or a surface on which the flexible display 250 is visible from the outside of the electronic device 101) may be defined as a front surface of the electronic device 101. In addition, the opposite surface of the front surface may be defined as a rear surface of the electronic device 101. In addition, a surface surrounding a space between the front surface and the rear surface may be defined as a side surface of the electronic device 101.

According to an embodiment, the foldable housing 201 may include a first housing 210, a second housing 220 including a sensor area 222, a first rear cover 215, a second rear cover 225, and a hinge assembly 230. According to an embodiment, the hinge assembly 230 may include a hinge cover that covers a foldable portion of the foldable housing 201. The foldable housing 201 of the electronic device 101 is not limited to the shape and coupling shown in FIGS. 2 and 3 and may be implemented by combinations and/or coupling of other shapes or parts. For example, in an embodiment, the first housing 210 and the first rear cover 215 may be integrally formed, and the second housing 220 and the second rear cover 225 may be integrally formed.

According to an embodiment, an illuminance sensor and an image sensor may be disposed in the sensor area 222. The illuminance sensor may detect the amount of light around the electronic device 101, and the image sensor may convert light incident through a camera lens into a digital signal. The illuminance sensor and the image sensor may be visually exposed to the flexible display 250. According to an embodiment, the illuminance sensor and the image sensor may not be visually exposed. For example, the camera may be configured as an under-display camera (UDC). Pixels in one area of the flexible display 250 corresponding to the position of the UDC may be configured to be different from the pixels in other areas so that the image sensor and/or the camera may not be visually exposed.

According to an embodiment, the first housing 210 may be coupled to the hinge assembly 230 and may include a first front surface facing in a first direction and a first rear surface facing in a direction opposite the first direction. The second housing 220 may be coupled to the hinge assembly 230 and may include a second front surface facing in a second direction and a second rear surface facing in a direction opposite the second direction. The first housing 210 may rotate relative to the second housing 220 around the hinge assembly 230. The second housing 220 may rotate relative to the first housing 210 around the hinge assembly 230. The electronic device 101 may switch to a folded state or an unfolded state.

According to an embodiment, the first housing 210 may include a first side surface 211a spaced apart from a folding axis A of the hinge assembly 230 so as to be parallel thereto between the first front surface and the first rear surface, and the second housing 220 may include a first side surface 221a spaced apart from the folding axis A of the hinge assembly 230 so as to be parallel thereto between the second front surface and the second rear surface. In addition, the first housing 210 may include a second side surface 211b that is perpendicular to the first side surface 211a and has one end connected to the first side surface 211a and the opposite end connected to the hinge assembly 230, and a third side surface 211c that is perpendicular to the first side surface 211a, has one end connected to the first side surface 211a and the opposite end connected to the hinge assembly 230, and spaced apart from the second side surface 211b so as to be parallel thereto. The second housing 220 may include a second side surface 221b that is perpendicular to the 2-1st side surface 221a, and has one end connected to the first side surface 221a and the opposite end connected to the hinge assembly 230, and a third side surface 221c that is perpendicular to the first side surface 221a, has one end connected to the first side surface 221a and the opposite end connected to the hinge assembly 230, and spaced apart from the second side surface 221b so as to be parallel thereto. When the first housing 210 is folded relative to the second housing 220 around the hinge assembly 230 (e.g., FIG. 3), the first side surface 211a may move closer to the first side surface 221a, and when the first housing 210 is unfolded relative to the second housing 220 around the hinge assembly 230 (e.g., FIG. 2), the first side surface 211a may move away from the first side surface 221a.

According to an embodiment, the first front surface and the second front surface of the electronic device 101 may face each other in a fully folded state and the first direction may be the same as the second direction in a fully unfolded state. In the fully unfolded state, the first side surface 211a and the first side surface 221a may be spaced a maximum distance apart from each other.

According to an embodiment, the first housing 210 and the second housing 220 may be disposed on both sides of the folding axis A and may have a generally symmetrical shape with respect to the folding axis A. As will be described later, the first housing 210 and the second housing 220 may have different angles or distances therebetween depending on whether the electronic device 101 is in an unfolded state, a folded state, or an intermediate state in which they are partially unfolded (or partially folded).

According to an embodiment, as shown in FIG. 2, the first housing 210 and the second housing 220 may form a recess that accommodates the flexible display 250 together. According to an embodiment, at least a portion of the first housing 210 and the second housing 220 may be formed of a metal material or a non-metal material having a selected rigidity to support the flexible display 250. At least the portion made of a metal material may provide a ground plane of the electronic device 101 and may be electrically connected to a ground line formed on a printed circuit board disposed inside the foldable housing 201.

According to an embodiment, a protective member may be disposed outside the flexible display 250. The protective member may be formed to be integral with or separate from the side surface of the foldable housing 201. The flexible display 250 may not adhere to the side surface of the foldable housing 201 and/or the protective member. A gap may be formed between the flexible display 250 and the protective member. The protective member may be configured to cover internal components of the electronic device 101 from the outside or protect internal components of the electronic device 101 from external impact. According to an embodiment, the protective member may be configured to cover wires mounted on the flexible display 250 from the outside or protect the same from external impact.

According to an embodiment, the first rear cover 215 may be disposed on one side of the folding axis A and on the rear surface of the electronic device 101 and may have, for example, a substantially rectangular periphery, and the edge thereof may be surrounded by the first housing 210. Similarly, the second rear cover 225 may be disposed on the other side of the folding axis A on the rear surface of the electronic device 101, and the edge thereof may be surrounded by the second housing 220.

According to an embodiment, the first rear cover 215 and the second rear cover 225 may have a substantially symmetrical shape with respect to the folding axis A. However, the first rear cover 215 and the second rear cover 225 do not necessarily have a symmetrical shape, and in another embodiment, the electronic device 101 may include various shapes of the first rear cover 215 and the second rear cover 225. In another embodiment, the first rear cover 215 may be integrally formed with the first housing 210, and the second rear cover 225 may be integrally formed with the second housing 220.

According to an embodiment, the first rear cover 215, the second rear cover 225, the first housing 210, and the second housing 220 may form a space in which various components of the electronic device 101 (e.g., a printed circuit board or a battery) may be disposed. According to an embodiment, one or more components may be disposed or visually exposed on the rear surface of the electronic device 101. For example, at least a portion of a sub-display may be visually exposed through the first rear surface area 216 of the first rear cover 215. For example, one or more components or sensors may be visually exposed through the second rear surface area 226 of the second rear cover 225. In an embodiment, the sensor may include a proximity sensor and/or a rear camera.

According to an embodiment, the front camera disposed on the front surface (e.g., the second front surface) of the electronic device 101 or the rear camera exposed through the second rear surface area 226 of the second rear cover 225 may include one or more lenses, an image sensor, and/or an image signal processor. A flash may include, for example, a light-emitting diode or a xenon lamp. In an embodiment, two or more lenses (infrared camera, wide-angle, and telephoto lenses) and image sensors may be disposed on one side of the electronic device 101.

Referring to FIG. 3, the hinge cover included in the hinge assembly 230 may be disposed between the first housing 210 and the second housing 220 to cover internal components. According to an embodiment, the hinge assembly 230 may be covered by at least a portion of the first housing 210 and the second housing 220 or exposed to the outside depending on the states of the electronic device 101 (an unfolded state, an intermediate state, or a folded state).

According to an embodiment, as shown in FIG. 2, when the electronic device 101 is in an unfolded state (e.g., a fully unfolded state), the hinge assembly 230 may be covered by the first housing 210 and the second housing 220 so as not to be exposed. According to an embodiment, as shown in FIG. 3, when the electronic device 101 is in a folded state (e.g., a fully folded state), the hinge assembly 230 may be exposed to the outside between the first housing 210 and the second housing 220. As another example, when the first housing 210 and the second housing 220 are in an intermediate state in which they are folded with a certain angle, the hinge assembly 230 may be partially exposed to the outside between the first housing 210 and the second housing 220. However, in this case, the exposed area may be smaller than that in the fully folded state. In an embodiment, the hinge assembly 230 may include a curved surface.

According to an embodiment, the flexible display 250 may be disposed in a space formed by the foldable housing 201. For example, the flexible display 250 may be seated on a recess formed by the foldable housing 201 so as to be visible from the outside through the front surface (e.g., the first front surface and/or the second front surface) of the electronic device 101. According to an embodiment, the flexible display 250 may constitute most of the front surface (e.g., the first front surface and/or the second front surface) of the electronic device 101. Therefore, the front surface (e.g., the first front surface and/or the second front surface) of the electronic device 101 may include the flexible display 250, and a partial area of the first housing 210 and a partial area of the second housing 220 adjacent to the flexible display 250. In addition, the rear surface (e.g., the first rear surface and/or the second rear surface) of the electronic device 101 may include the first rear cover 215, a partial area of the first housing 210 adjacent to the first rear cover 215, the second rear cover 225, and a partial area of the second housing 220 adjacent to the second rear cover 225.

According to an embodiment, the flexible display 250 may refer to a display in which at least a partial area may be transformed into a flat or curved surface. According to an embodiment, the flexible display 250 may include a folding area 253, a first display area 251 disposed on one side of the folding area 253 (e.g., on the left side of the folding area 253 shown in FIG. 2), and a second display area 252 disposed on the other side thereof (e.g., on the right side of the folding area 253 shown in FIG. 2).

According to an embodiment, the first display area 251 may be disposed on the first housing 210, and the second display area 252 may be disposed on the second housing 220. According to an embodiment, the folding area 253 may connect the first display area 251 and the second display area 252, and may be disposed on the hinge assembly 230.

The divided areas of the flexible display 250 shown in FIG. 2 are exemplary, and the display 250 may be divided into a plurality of (e.g., four or more or two) areas depending on a structure or function. For example, although the areas of the flexible display 250 are divided by the folding area 253 extending parallel to the folding axis A in the embodiment shown in FIG. 2, the flexible display 250 may be divided into areas based on another folding area (e.g., a folding axis parallel to the width direction of the electronic device).

According to an embodiment, the flexible display 250 may be combined with or disposed adjacent to a touch panel equipped with a touch sensing circuit and a pressure sensor capable of measuring the intensity (pressure) of a touch (e.g. by a user, or a user input). For example, the flexible display 250 may be combined with or disposed adjacent to a touch panel, as an example of a touch panel, which detects a stylus pen in an electromagnetic resonance (EMR) method.

According to an embodiment, the first display area 251 and the second display area 252 may have a generally symmetrical shape with respect to the folding area 253.

Hereinafter, the operation of the first housing 210 and the second housing 220 and respective areas of the flexible display 250 depending on the states (e.g., a folded state, an unfolded state, or an intermediate state) of the electronic device 101 will be described.

According to an embodiment, when the electronic device 101 is in an unfolded state (e.g., FIG. 2), the first housing 210 and the second housing 220 may be disposed to form an angle of 180 (or substantially 180) degrees and face in the same direction. The surface of the first display area 251 and the surface of the second display area 252 of the flexible display 250 may form 180 degrees therebetween and face in the same direction (e.g., the front direction of the electronic device). In this case, the folding area 253 may form the same plane as the first display area 251 and the second display area 252.

According to an embodiment, when the electronic device 101 is in a folded state (e.g., FIG. 3), the first housing 210 and the second housing 220 may be disposed to face each other. The surface of the first display area 251 and the surface of the second display area 252 of the flexible display 250 may form a narrow angle (e.g., between 0 degrees and 10 degrees) and face each other. At least a portion of the folding area 253 may be formed of a curved surface having a predetermined curvature.

According to an embodiment, when the electronic device 101 is in an intermediate state, the first housing 210 and the second housing 220 may be disposed at a certain angle therebetween. For example, when the electronic device 101 is in the intermediate state, the first housing 210 and the second housing 220 may be disposed at a certain angle to one another, where this angle is an angle between the first housing 210 and the second 220 in the folded state and an angle between the first housing 210 and the second housing 220 in the unfolded state The surface of the first display area 251 and the surface of the second display area 252 of the flexible display 250 may form an angle greater than that in the folded state and less than that in the unfolded state. At least a portion of the folding area 253 may be formed of a curved surface having a predetermined curvature, and the curvature at this time may be smaller than that in the folded state.

According to an embodiment, the first housing 210 may include first housing holes 281 and 283. According to an embodiment, the first housing holes 281 and 283 may include a first housing hole 281 formed on the second side surface 211b of the first housing 210 and a second housing hole 283 formed on the third side surface 211c of the first housing 210.

According to an embodiment, the second side surface 211b of the first housing 210 may include a first segment 214a made of a non-metal material. According to an embodiment, a pair of first segments 214a may be provided so as to be spaced apart from each other. According to an embodiment, the first housing hole 281 may be formed between the pair of first segments 214a.

According to an embodiment, the third side surface 211c of the first housing 210 may include a second segment 214b made of a non-metal material. According to an embodiment, a pair of second segments 214b may be provided so as to be spaced apart from each other. According to an embodiment, the second housing hole 283 may be formed between the pair of second segments 214b.

According to an embodiment, the number of at least one first housing hole 281 may be the same as the number of at least one second housing hole 283.

According to an embodiment, the second side surface 211b and the third side surface 211c may be disposed to be parallel to each other. According to an embodiment, the plurality of first housing holes 281 and the plurality of 1-2nd housing holes 283 may be disposed to overlap each other in the longitudinal direction of the electronic device 101. For example, the plurality of first housing holes 281 may be disposed to respectively correspond to the plurality of second housing holes 283 in the longitudinal direction of the electronic device 101.

According to an embodiment, the plurality of first housing holes 281 may be disposed on a straight line in the width direction of the electronic device 101 (or the first housing 210). According to an embodiment, the plurality of second housing holes 283 may be disposed on a straight line in the width direction of the electronic device 101 (or the first housing 210).

According to an embodiment, the second housing 220 may include second housing holes 282 and 284. According to an embodiment, the second housing holes 282 and 284 may include a first housing hole 282 formed on the second side surface 221b of the second housing 220 and a 2-2nd housing hole 284 formed on the third side surface 221c of the second housing 220.

According to an embodiment, the second side surface 221b of the second housing 220 may include a 2-1 st segment 224a made of a non-metal material. According to an embodiment, a pair of first segments 224a may be provided to be spaced apart from each other. According to an embodiment, some of the first housing holes 282 may be formed between the pair of first segments 224a, and the remaining of the first housing holes 282 may be formed between the folding axis A (or the hinge assembly 230) and any one of the first segments 224a.

According to an embodiment, the third side surface 221c of the second housing 220 may include a secondsegment 224b made of a non-metal material. According to an embodiment, a pair of second segments 224b may be provided to be spaced apart from each other. According to an embodiment, the first housing hole 282 may be formed between the pair of second segments 224b.

According to an embodiment, the third side surface 221c of the second housing 220 may include a connection terminal 289 (e.g., the connection terminal 178 in FIG. 1).

It will be appreciated that various embodiments described in this document are not limited to and applied to the electronic device 101 described with reference to FIGS. 2 and 3. For example, various embodiments described in this document may also be applied to other foldable devices, such as a device that is folded such that a main display thereof is visible to the outside (e.g., an out-foldable device), a device capable of being folded multiple times, and/or a device in which a flexible display received inside the electronic device 101 is exposed to the outside so that the size of a display area is substantially expanded. It will be further appreciated that, whilst foldable devices are disclosed in detail in the preceding examples, the following detailed examples may similarly apply to any types of electronic devices having one or more displays of different size (i.e. such as a main, or sub display) or having one or more displays which have a viewing area (e.g., area which is exposed to an outside of an electronic device) which is expandable and/or reduceable (e.g., such as an electronic device comprising a rollable display or a stretchable display).

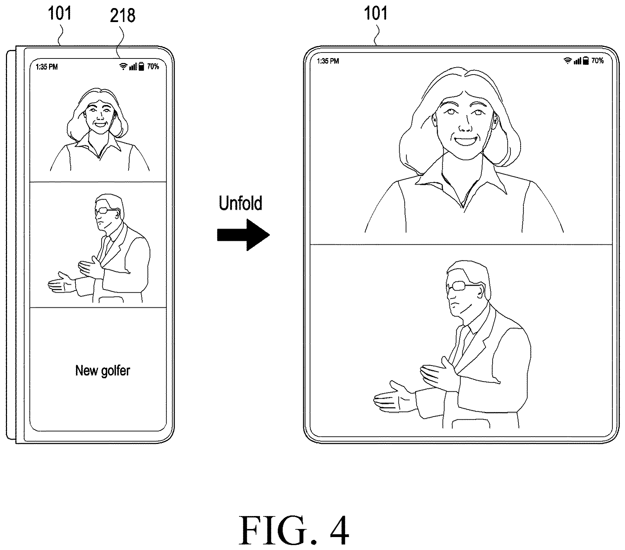

FIG. 4 is a diagram illustrating an example in which at least one image included in web content (e.g., an execution screen of an internet application) occupies most of a screen (e.g., a display area of a touch screen display) according to the prior art.

Referring to FIG. 4, an electronic device 101 according to an embodiment of this document may display a web page (e.g., an execution screen of an internet application) on a second screen 218 (e.g., a sub-display,,. In various examples described herein, a sub display (or a sub-display screen) may refer to a display area (or screen), and in a foldable device, may be a display area when the electronic device 101 is in a folded state For example, a sub-display may be of smaller size than a main display (or main display screen) or may correspond to only a part of a main display (e.g., a part of the main display disposed on either a first housing part (e.g., first housing 210) or a second housing part (e.g., second housing 220) of a flexible device. In examples, such as in a foldable device, a main display may refer to a display area in an unfolded state. The electronic device 101 according to an embodiment of this document may obtain a user's physical input for unfolding the electronic device 101. The electronic device 101 according to an embodiment of this document may display a web page on a first screen (e.g., a main display) that is of greater size than the second screen (e.g. a sub display) according to the unfolding operation of the user. According to the prior art, the electronic device 101 according to an embodiment of this document may display content (e.g., at least one image and/or at least one text) included in the web page according to the aspect ratio of the first screen. According to the prior art, since the content (e.g., at least one image) included in the web page is enlarged and displayed according to the aspect ratio of the first screen, other content (e.g., at least one text) included in the web page may not be displayed on the first screen.

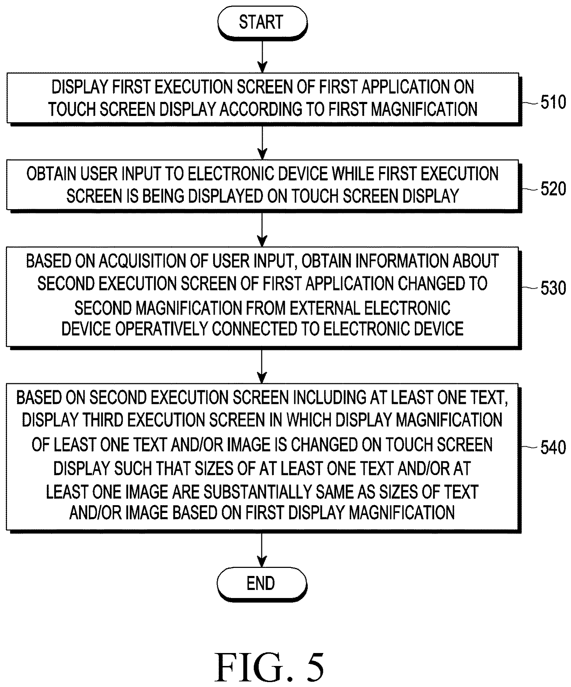

FIG. 5 is an exemplary diagram illustrating a function or operation in which an electronic device 101 (e.g. an electronic device according to Figures 1, 2 and 3) adjusts the size of at least one image and/or at least one text included in a web page and displays web content (e.g., at least one image and/or at least one text) according to an embodiment of this document.

Referring to FIG. 5, an electronic device 101 according to an embodiment of this document, in operation 510, may display a first execution screen (or, alternatively, first screen, or first window, or first execution region) of a first application (e.g., an internet application) on a touch screen display (e.g., the display module 160) according to a first magnification (or default magnification). The first magnification (e.g., a display magnification of 100%) according to an embodiment of this document may be a display magnification determined according to the aspect ratio of the first screen (e.g., the main display

In operation 520, the electronic device 101 according to an embodiment of this document may obtain a user input to the electronic device 101 while the first execution screen is being displayed on the touch screen display. The user input to the electronic device 101 according to an embodiment of this document may include a touch input to a visual object (e.g., a first visual object 640) displayed on the first execution screen and/or a user's touch or press input to a physical button provided in the electronic device 101. The electronic device 101 according to an embodiment of this document may identify the size of at least one image included in the first execution screen and, if it is determined that the size of the at least one image occupies the horizontal and/or vertical length of the first screen (e.g., a display area of a touch screen display) by a specified ratio or more, display a visual object (e.g., a first visual object 640) for adjusting the screen magnification.

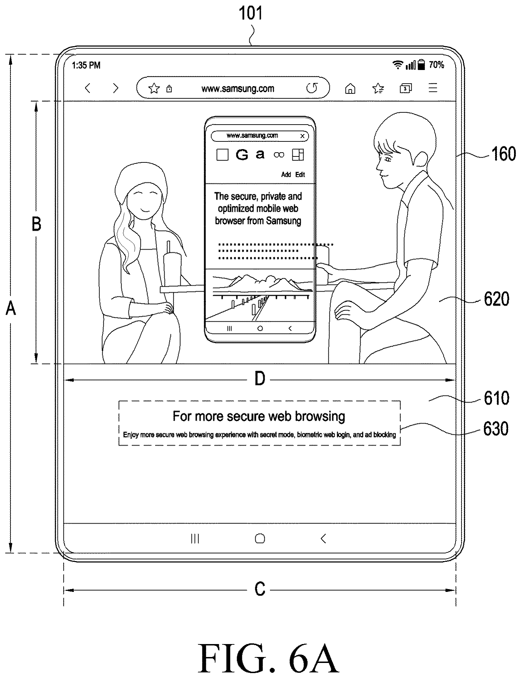

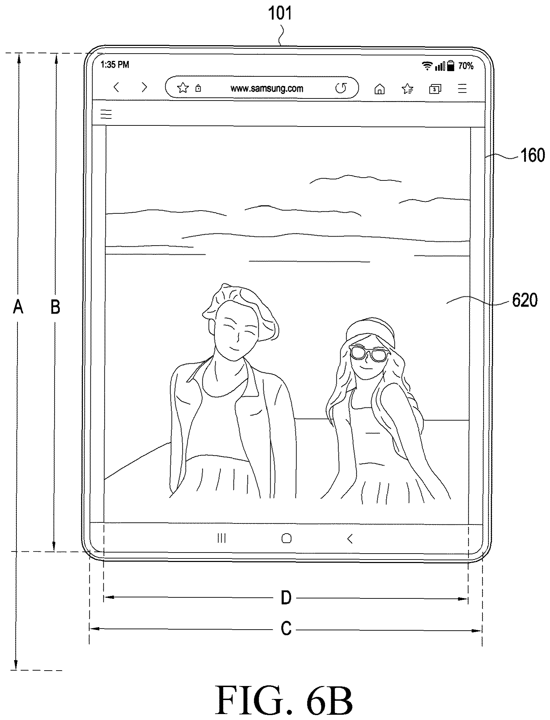

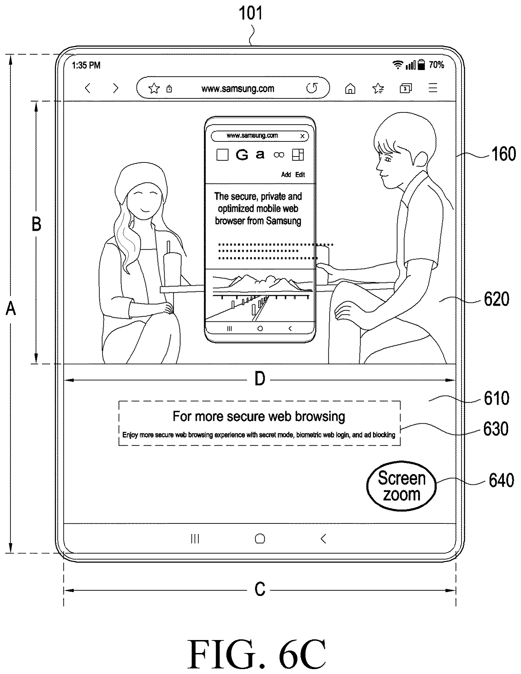

FIGS. 6A and 6B are exemplary diagrams illustrating a function or operation in which an electronic device 101 identifies the size of at least one image included in a web page (e.g.. the first execution screen) or a ratio thereof occupying a display area of a display module 160 according to an embodiment of this document. FIG. 6C is an exemplary diagram illustrating a function or operation in which an electronic device 101 displays a first visual object for adjusting the display magnification of at least one image and/or at least one text and displaying the same in the case where the size of at least one image included in web content exceeds a specified size or ratio according to an embodiment of this document. Referring to FIG. 6A, a first execution screen 610 (e.g., a web page) according to an embodiment of this document may include at least one image 620 and at least one text 630. At least one image 620 and at least one text 630 according to an embodiment of this document may be displayed according to a specified (or default) size (e.g., a first display magnification). The electronic device 101 according to an embodiment of this document may compare the horizontal length C of a display area of the display module 160 with the horizontal length D of at least one image 620 and the vertical length A of the display area of the display module 160 with the vertical length B of the at least one image 620, respectively, using DPI (dots per inch) information obtained from an external electronic device (e.g., a server). The electronic device 101 according to an embodiment of this document may determine whether or not either of the horizontal and vertical lengths of at least one image 620 exceeds a specified ratio (e.g., 50% of the respective lengths of display area of the display module 160). In the case where the first execution screen 610 (e.g., a web page) includes a plurality of images, the electronic device 101 according to an embodiment of this document may determine a representative image, of the plurality of images, based on the size of the image (e.g., determine an image having the greatest length in a specified direction (e.g., horizontal or vertical), among a plurality of images, to be a representative image) and identify the size of the determined representative image. In the case where the first execution screen 610 (e.g., a web page) includes a plurality of images, the electronic device 101 according to an embodiment of this document may determine a representative image, based on the display position of the image (e.g., determine an image displayed on the upper portion of the display area of the display module 160 or an image displayed in the center of the display area of the display module 160, among a plurality of images, to be a representative image) and identify the size of the determined representative image. In the case where the first execution screen 610 (e.g., a web page) includes a plurality of images and where the distances between the images are within a threshold distance, the electronic device 101 according to an embodiment of this document may determine an outer line of an image including all boundaries of the plurality of images as one image area and identify the size of the one determined image area. According to an embodiment of this document, the size of the display area of the display module 160 may be substantially the same as the size of the display module 160 or may be smaller than the size of the display module 160 by a specified ratio.

FIG. 6A illustrates the case where the horizontal length D of at least one image 620 displayed (e.g. in a webpage) is greater than the horizontal length C of display area. For example, when determining to apply a ratio to (e.g. to compare) each of the horizontal and vertical lengths of the at least one image 620, to the respective lengths of the display area of the display module 160, a specific ratio, or value (e.g. percentage) may be exceeded. By way of example, in Figure 6A, an image in which the horizontal length is greater than the vertical length may exceed a specific ratio by comparing the horizontal lengths of the image and the display area. FIG. 6B also illustrates the case where the vertical length B of at least one image 620 is greater than the vertical length C of the display area of the display module 160. For example, when applying a ratio (e.g.. to compare) each of the horizontal and vertical lengths of the display area of the at least one image 620 to the respective lengths of the display module 160, a specific ratio, or value (e.g. percentage) may be exceeded. By way of example, in Figure 6B, an image in which the vertical length is greater than the horizontal length, may exceed a specific ratio when comparing the vertical lengths of the image and the display area. Referring to FIG. 6C, as shown in FIGS. 6A and/or 6B, if the size of at least one image 620 included in the first execution screen 610 occupies most of the first execution screen 610 (e.g., if both of the horizontal (D) and vertical lengths (B) of at least one image 620 are greater than the lengths (C, A) of the display area of the display module (160), a specific ratio (e.g. percentage) may be exceeded when comparing the vertical and horizontal lengths. The electronic device 101 according to an embodiment of this document may display a visual object (e.g., a first visual object 640) for changing the display magnification of the content (e.g., at least one image 620 and/or at least one text 630) included in the first execution screen (e.g., a web page) on the first execution screen 610. The visual object (e.g., the first visual object 640) according to an embodiment of this document may always be displayed on the first execution screen 610 (e.g., a web page) or may be displayed based on a user input to a specified menu included in the first execution screen 610 (e.g., a web page).

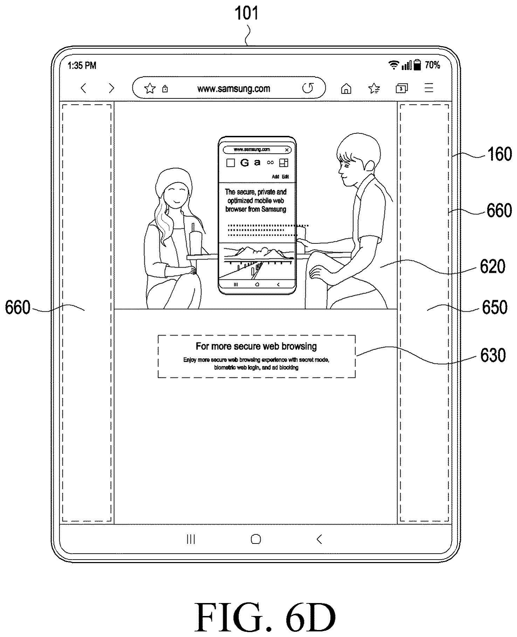

The electronic device 101 according to an embodiment of this document, in operation 530, based on the acquisition of the user input in operation 520, may obtain information about a second execution screen (or, otherwise, a second screen) of the first application, which was (or has been) changed to a second magnification, from an external electronic device (e.g., a server) operatively connected to the electronic device 101. FIG. 6D is an exemplary diagram illustrating a function or operation in which an electronic device obtains information about at least one image and at least one text whose display magnification was adjusted from an external electronic device (e.g., a server) and produces a web page, based on the obtained information, according to an embodiment of this document. For example, the second magnification may refer to a pre-configured adjustment to the magnification (e.g. as provided by an external device, such as a server) from the first execution screen to provide the second execution screen. Referring to FIG. 6D, the electronic device 101 according to an embodiment of this document, based on a user input to the electronic device 101 (e.g., a touch input to the first visual object 640), may information about an execution screen (e.g., the second execution screen 650) having a display magnification reduced by a specified ratio, or percentage, (e.g., 70%) from that of the first execution screen, from an external electronic device (e.g., a web page provider). Information about the second execution screen 650 of the first application (e.g., an internet application) according to an embodiment of this document may include information about web content (for example, at least one image and/or text) having a size reduced by a predetermined ratio, or percentage, (e.g., 70%) from the size of the web content included in the first execution screen 610. The electronic device 101 according to an embodiment of this document may produce a second execution screen 650, based on the information about the second execution screen 650 obtained from the external electronic device. The second execution screen 650 according to an embodiment of this document may include a padding area 660 (or margin) according to reduction in the size of web content. The second execution screen 650 according to an embodiment of this document may not be displayed on a touch screen display (e.g., the display module 160). Information about at least one image 620 according to an embodiment of this document (e.g., information about an image whose display magnification was changed) may be obtained from an external electronic device (e.g., a domain server). Changing the display magnification (e.g., size) of at least one text 630 according to an embodiment of this document may be performed by the electronic device 101 (e.g., the processor 120). According to an embodiment of this document, the display magnification of an image transmitted from an external electronic device (e.g., a server) may be performed by the electronic device 101 (e.g., the processor 120).

The electronic device 101 according to an embodiment of this document, in operation 540, based on the second execution screen 650 including at least one text 630, may display a third execution screen 670 in which the display magnification of at least one text 630 and/or at least one image 620 is changed on a touch screen display (e.g., the display module 160) such that the sizes of at least one text 630 and/or at least one image 620 are substantially the same as the size of the text (e.g., the size of the text displayed on the first execution screen 610) and/or the size of the image (e.g., the size of the image displayed on the first execution screen 610) based on the first display magnification (i.e. as displayed on the first execution screen 610).

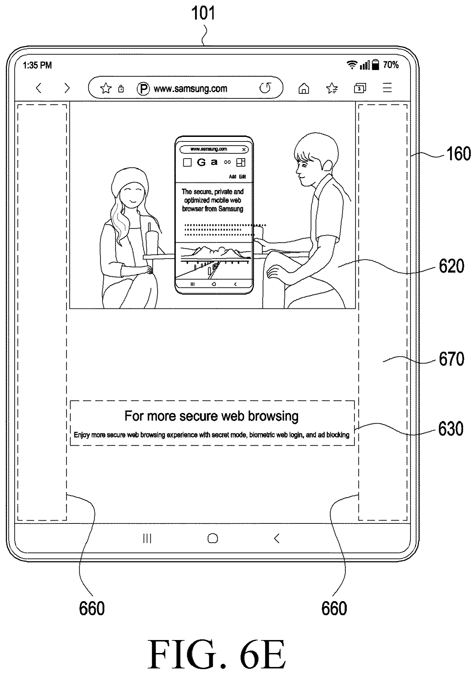

FIG. 6E is an exemplary diagram illustrating a function or operation in which an electronic device 101 changes only the size of at least one text 630 among at least one image 620 and at least one text 630 included in a produced web page (e.g., the second execution screen 650) and displays a web page (e.g., the third execution screen 670, or third screen) according to an embodiment of this document.

Referring to FIG. 6E, the electronic device 101 according to an embodiment of this document may change (e.g., increase) the size of at least one text 630 displayed on the second execution screen 650 such that the size of at least one text 630 is substantially the same as the size of the text based on the first display magnification (e.g., the size of the text displayed on the first execution screen 610). In an example, the size of at least one text 630 is increased compared to that of the second execution screen. The size of the padding area 660 of the third execution screen 670 according to an embodiment of this document may be substantially the same as that of the padding area 660 of the second execution screen 650.

According to another embodiment of this document, in some cases, the execution screen of the first application may need to be enlarged and displayed For example, it may be beneficial to the user that, in order to view content, the execution screen of the first application is increased (or enlarged). In this case, the electronic device 101 according to an embodiment of this document may obtain information for a fourth execution screen (or fourth screen) of the first application, the fourth execution screen with a fourth magnification changed to be greater than the first display magnification, from an external electronic device (e.g., a server) operatively connected to the electronic device 101. The electronic device 101 according to an embodiment of this document may display a fifth execution screen (or fifth screen) of the first application in which the display magnification of at least one image 620 included in the fourth execution screen was adjusted to the first display magnification or a magnification less than the first display magnification. In this example, the at least one image 620 may be resized (or adjusted) from the fourth magnification (as the fourth magnification being larger than the first magnification may increase the size of the at least one image to be greater than a specific ratio to the display area). In this case, the display magnification for at least one text 630 may remain in the fourth display magnification. In this example, the user is more easily able to view, or read, the displayed text (i.e. the text is a larger size). The electronic device 101 according to an embodiment of this document may obtain information about the fourth execution screen from an external electronic device (e.g., a server). Alternatively, the function or operation of changing the display magnification of at least one image 620 from the fourth display magnification to the first display magnification according to an embodiment of this document may also be performed by the electronic device 101 (e.g., the processor 120). According to such a function or operation, a web page with enhanced readability (e.g., the third execution screen 670 or the fifth execution screen) may be provided to the user. According to another embodiment of this document, the electronic device 101 may change (e.g., increase) the size of at least one image 620 displayed on the second execution screen 650 or may obtain information about at least one image 620 having a changed size from an external electronic device and display the same such that the size of at least one image 620 is substantially the same as the size of the image based on the first display magnification (e.g., the size of the image displayed on the first execution screen 610).

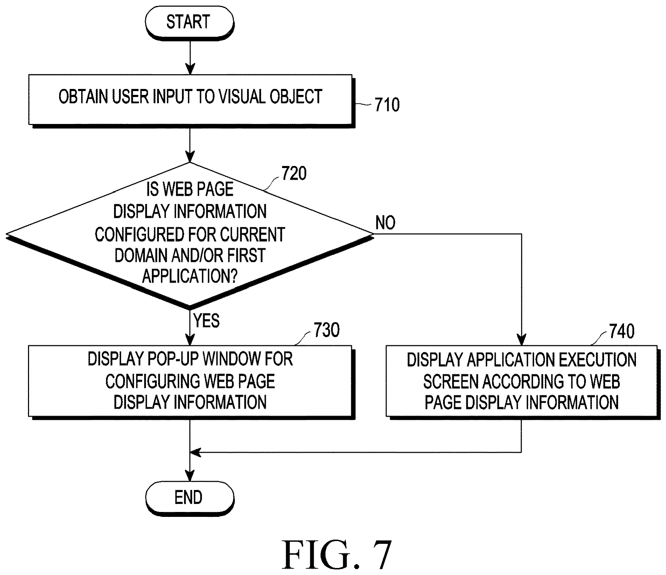

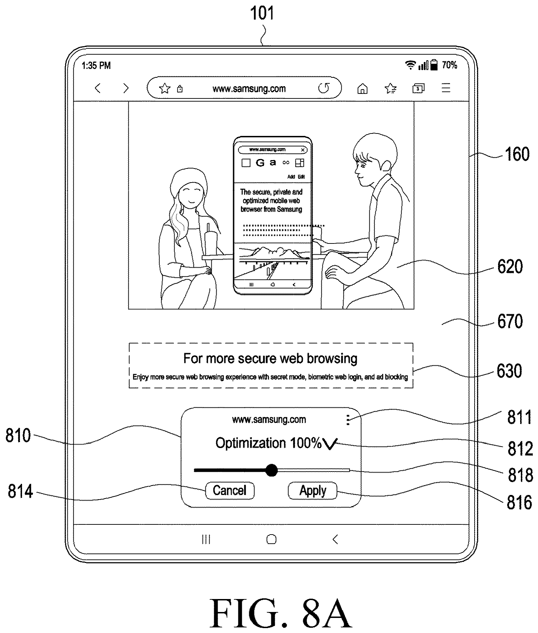

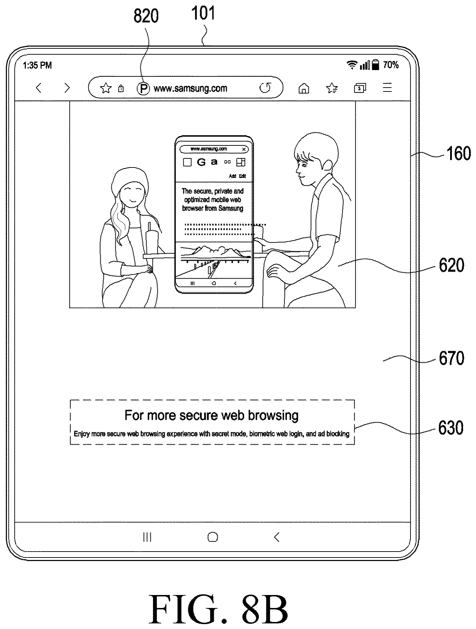

FIG. 7 is an exemplary diagram illustrating a function or operation in which an electronic device 101, based on whether or not web page display information configured for a current domain (e.g., www.samsung.com) is stored, displays a pop-up window 810 for configuring web page display information or displays an application execution screen (e.g., a web page) according to the stored web page display information according to an embodiment of this document. FIG. 8A is an exemplary diagram illustrating a function or operation in which an electronic device 101 displays a pop-up window 810 for configuring web page display information according to an embodiment of this document. FIG. 8B is an exemplary diagram illustrating a function or operation in which an electronic device 101 displays an indicator 820 indicating that a currently displayed screen is a screen whose screen display magnification has been changed according to an embodiment of this document.

Referring to FIGS. 7, 8A, and 8B, the electronic device 101 according to an embodiment of this document may obtain a user input to a visual object (e.g., the first visual object 640) in operation 710. The user input according to an embodiment of this document may include a touch input to a visual object (e.g., the first visual object 640). The visual object (e.g., the first visual object 640) according to an embodiment of this document may be displayed on a web page (e.g., the first execution screen 610) corresponding to a specific domain (e.g., www.samsung.com).

In operation 720, the electronic device 101 according to an embodiment of this document may determine whether or not web page display information is configured for the current domain. The web page display information according to an embodiment of this document may include information about the display magnification (e.g., image 70% and text 140%) that is specified by the user or pre-specified in order to change the display magnification (e.g., size) of the web content included in a web page (e.g., the first execution screen 610). According to the web page display information according to an embodiment of this document, the size of at least one image 620 may be changed (e.g., reduced) and displayed, and the size of at least one text 630 may be displayed while enlarging the size of the text.

In other words, the web page display information for at least one image 620 may be display magnification for changing (e.g., reducing) the size of at least one image 620 included in the web page (e.g., the first execution screen 610), and the web page display information for at least one text 630 may be display magnification for increasing (or enlarging) the size of at least one text 620 included in the web page. In addition, the display magnification (e.g., 140%) for at least one text 630 according to an embodiment of this document may indicate display magnification (e.g. magnification in comparison to) based on the second execution screen 650. For example, the size of at least one text may be displayed whilst substantially maintaining the size of the text based on the first execution screen 610. For example, the size of the at least one image may be displayed whilst reducing the size of the at least one image from the size displayed in the first execution screen. At least one image 620 mentioned in this document, in respect of all examples, or embodiments, herein discussed, may include a still image and/or a moving image (e.g., video), and, in examples, may be a still image (or snapshot) from a video.

The electronic device 101 according to an embodiment of this document, if it is determined that web page display information is not configured for the current domain (e.g., www.samsung.com) and/or the first application (e.g., an internet application), may display a pop-up window 810 for configuring web page display information in operation 730. Referring to FIG. 8B, the electronic device 101 according to an embodiment of this document may display a pop-up window 810 for configuring web page display information on a touch screen display (e.g., the display module 160). If web page display information is initially configured for a specific domain, the electronic device 101 according to an embodiment of this document may display a web page on a touch screen display (e.g., the display module 160) according to a pre-specified display magnification (e.g., image 70% and text 140%). The pre-specified display magnification (e.g., image 70% and text 140%) according to an embodiment of this document may be determined as a representative display magnification, and the representative display magnification is exemplified by the expression "Optimization 100%" in FIG. 8B. The pop-up window 810 according to an embodiment of this document may include at least one of a first option indicator 811 for displaying an option menu, an indicator 812 for extending or reducing the pop-up window 810, a first button 814 for ending the display of the pop-up window 810, a second button 816 for determining a currently displayed web page display magnification as a web page display magnification for a specific domain, and a first slide bar 818 for changing the display magnification of the web page. The first slide bar 818 according to an embodiment of this document is merely exemplary, and may be implemented in the form of a button including display magnification. In other examples, other visual displays, or indicators for changing the display magnification, may be used. The electronic device 101 according to an embodiment of this document may display a web page (e.g., the third execution screen 670) to which the display magnification specified by the first slide bar 818 was applied so as to overlap the pop-up window 810. The electronic device 101 according to an embodiment of this document may display an indicator 820 indicating that the display magnification of the screen to which the web page display magnification is applied has been changed as shown in FIG. 8B. The indicator 820 according to an embodiment of this document may be displayed, for example, on a window for inputting an address, which is included in the web page, but the embodiment of this document is not limited thereto. According to an embodiment of this document, although the web page display information may be individually configured for a domain (e.g., www.samsung.com), it may also be configured for a specified application (e.g., an internet application). In this case, the electronic device 101 according to an embodiment of this document, if a specified application (e.g., an internet application) is executed, may display execution screens (e.g., web pages) of the specified application by commonly applying configured web page display information thereto.

The electronic device 101 according to an embodiment of this document, if it is determined that web page display information is configured for the current domain (e.g., www.samsung.com) and/or the first application (e.g., an internet application), may display an application execution screen (e.g., a web page) according to the web page display information in operation 740.

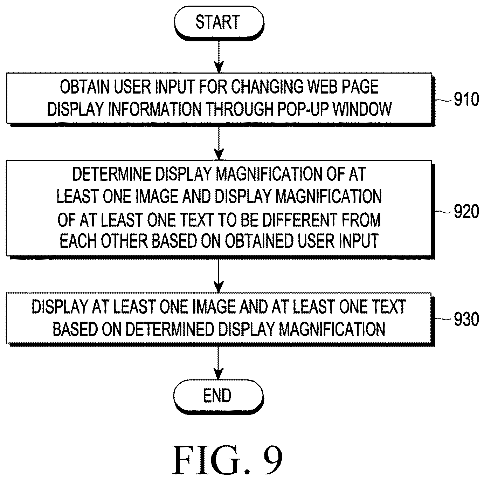

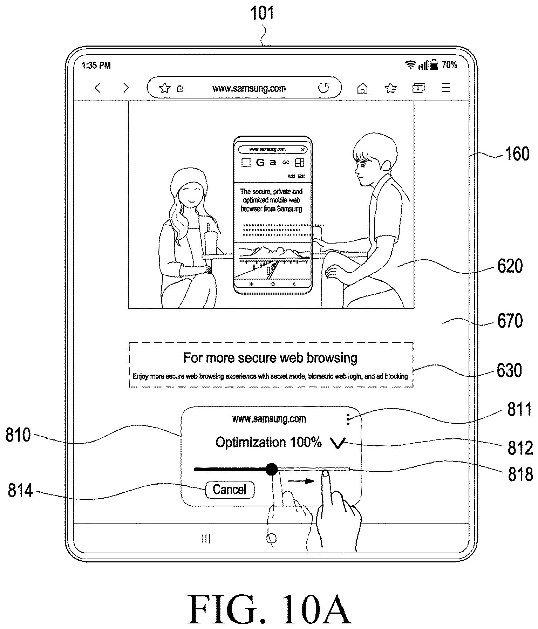

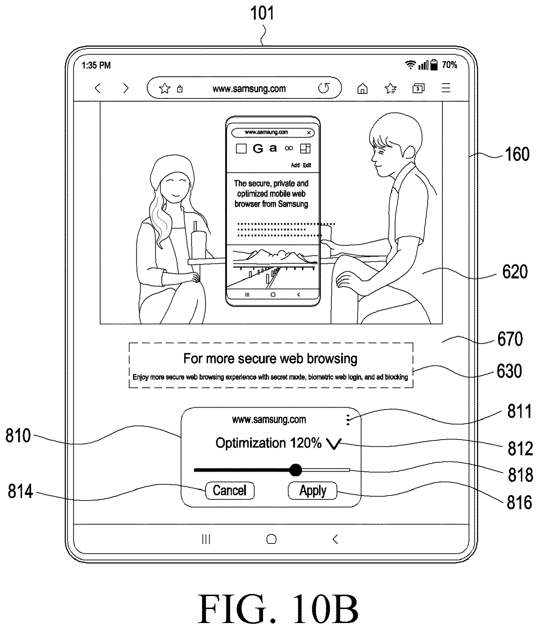

FIG. 9 is an exemplary diagram illustrating a function or operation of configuring web page display information according to a user input to a pop-up window according to an embodiment of this document. FIGS. 10A and 10B are exemplary diagrams illustrating the function or operation described in relation to FIG. 9 in terms of a user interface.

Referring to FIG. 9, in operation 910, the electronic device 101 according to an embodiment of this document may obtain a user input for changing web page display information through a pop-up window 810. As shown in FIG. 10A, the electronic device 101 according to an embodiment of this document may obtain a user input for changing the display magnification of the web page through a first slide bar 818.

The electronic device 101 according to an embodiment of this document, based on the user input obtained in operation 910, may determine a display magnification of at least one image 620 and a display magnification of at least one text 630 to be different from each other in operation 920. If the representative display magnification (e.g. as exemplified by Optimization, in Figure 10A to Figure 10B) is changed from 100% to 120% according to a user input to the first slide bar 818, the electronic device 101 according to an embodiment of this document may change the display magnification (e.g., from 70% to 84%) of at least one image 620 and change the display magnification (e.g., from 140% to 120%) of at least one text 630. The electronic device 101 according to an embodiment of this document may apply the changed display magnification to the current web page in real time and display the same together with the pop-up window 818. FIG. 10B illustrates a web page (e.g., a fourth execution screen 1010) including at least one image 620 and at least one text 630 changed according to the changed display magnification (e.g., image 84% and text 120%) by way of example. The fourth execution screen 1010 according to an embodiment of this document may include at least one image 620 having a size of 84% of the size of at least one image 620 included in the web page (e.g., the first execution screen 610) being displayed before the user input (e.g., a touch input to the first visual object 640) is obtained, and at least one text 630 having substantially the same size as at least one text 630 included in the web page (e.g., the first execution screen 610) being displayed before the user input (e.g., a touch input to the first visual object 640) is obtained.

In operation 930, the electronic device 101 according to an embodiment of this document may display at least one image 630 and at least one text 620, based on the display magnification determined in operation 920. The electronic device 101 according to an embodiment of this document may display, on a touch screen display (e.g., the display module 160), a fourth execution screen 1010 including at least one image 620 having a size of 84% of the size of at least one image 620 included in the web page (e.g., the first execution screen 610) being displayed before the user input (e.g., a touch input to the first visual object 640) is obtained and at least one text 630 having substantially the same size as at least one text 630 included in the web page (e.g., the first execution screen 610) being displayed before the user input (e.g., a touch input to the first visual object 640) is obtained.

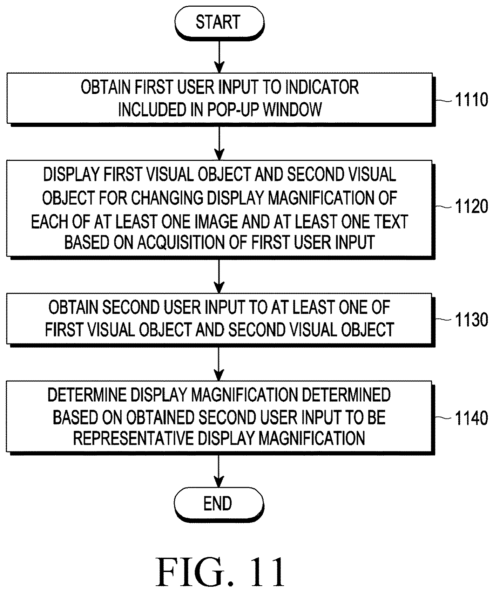

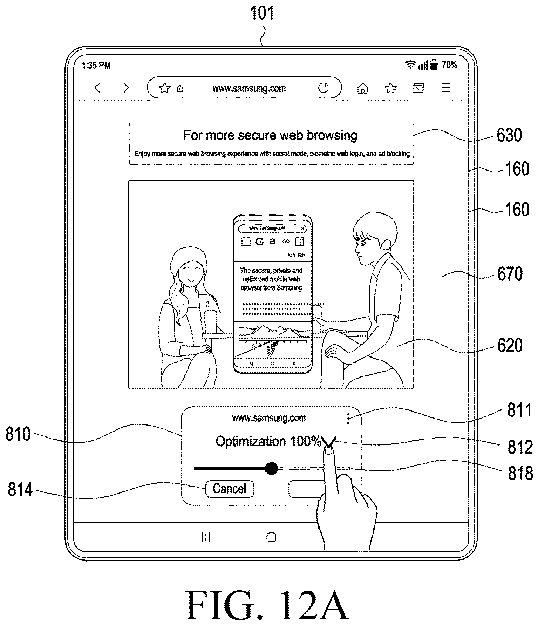

FIG. 11 is an exemplary diagram illustrating a function or operation in which an electronic device 101 configures web page display information through an extended pop-up window 810 according to an embodiment of this document. FIGS. 12A to 12D are exemplary diagrams illustrating the function or operation described in relation to FIG. 11 in terms of a user interface.

Referring to FIGS. 11 and 12A to 12D, the electronic device 101 according to an embodiment of this document may obtain a first user input to an indicator 812 included in the pop-up window 810 in operation 1110. As shown in FIG. 12A, the electronic device 101 according to an embodiment of this document may obtain a user's touch input to the indicator 812.

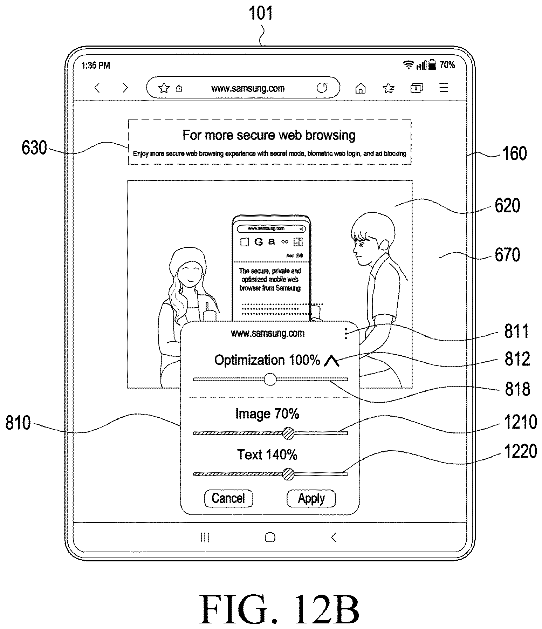

In operation 1120, the electronic device 101 according to an embodiment of this document may display a first visual object (e.g., a second slide bar 1210) and a second visual object (e.g., a third slide bar 1220) for changing the display magnification of each of at least one image 620 and at least one text 630, based on the acquisition of the first user input. The first visual object (e.g., the second slide bar 1210) and the second visual object (e.g., the third slide bar 1220) according to an embodiment of this document, as shown in FIG. 12B, may be displayed in the extended pop-up window 818 so as to indicate a display magnification (e.g., image 70% and text 140%) specified to each of at least one image 620 and at least one text 630, compared to the representative display magnification (e.g., 100%), for example, "Optimization 100%". FIG. 12B illustrates an embodiment in which a web page (e.g., the third execution screen 670) including at least one image 620 and at least one text 630 having sizes changed according to specified display magnifications (e.g., image 70% and text 140%) is displayed together with the expanded pop-up window 810 by way of example. The display magnification (e.g., 140%) specified for text shown in FIG. 12B by way of example may be display magnification determined by the electronic device 101 to display text having a size substantially the same as the size of at least one text 630 included in the screen before adjusting the screen display magnification according to the reduction of at least one image 620. In some examples, this may be the same size as a first execution screen (e.g. prior to screen display magnification adjustment). Alternatively, the specified display magnification according to an embodiment of this document may be specified (for example, pre-specified) as an arbitrary value.

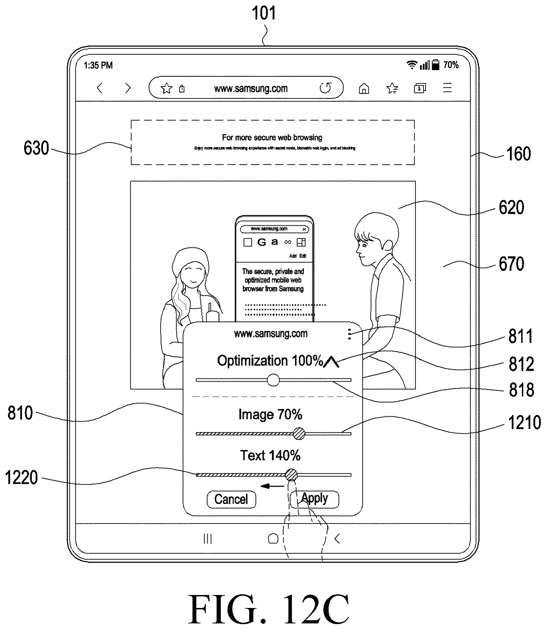

In operation 1130, the electronic device 101 according to an embodiment of this document may obtain a second user input to at least one of the first visual object (e.g., the second slide bar 1210) and the second visual object (e.g., the third slide bar 1220). As shown in FIG. 12C, the electronic device 101 according to an embodiment of this document may obtain a user input (e.g., a drag input) to the second visual object (e.g., the third slide bar 1220) for changing the display magnification of at least one text 630. If a user input to both of the first visual object (e.g., the second slide bar 1210) and the second visual object (e.g., the third slide bar 1220) is obtained, the electronic device 101 according to an embodiment of this document may switch the first slide bar 818 to an inactive state (e.g., a state in which the user is unable to control the slide bar).

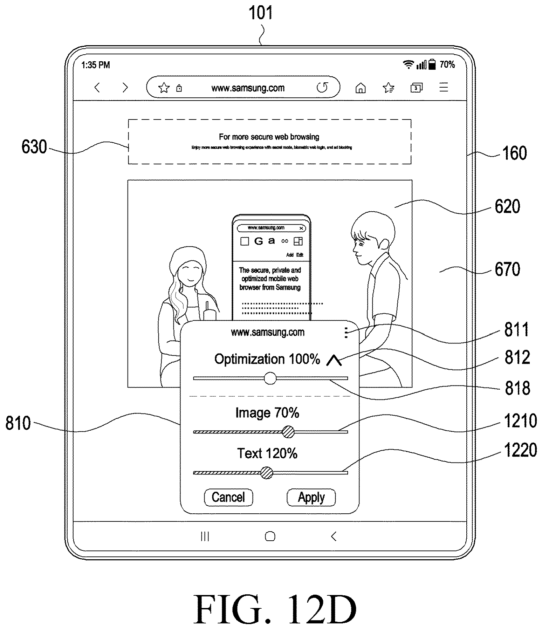

In operation 1140, the electronic device 101 according to an embodiment of this document determine the display magnification (e.g., image 70% and text 120%) determined based on the obtained second user input to be a representative display magnification (e.g., optimization 100%). As shown in FIG. 12D, the electronic device 101 according to an embodiment of this document, based on the second user input, may display, on the touch screen display (e.g., the display module 160), text in which the size of at least one text 630 is reduced by about 14.230% from the size of at least one text 630 included in the screen (e.g., the first execution screen 610) before adjusting the screen display magnification. If a user input to the indicator 812 is obtained when the pop-up window 810 is in an extended state, the electronic device 101 according to an embodiment of this document may switch the pop-up window 810 to a reduced state (e.g., the state shown in FIG. 12A). In another example, unlike the embodiments shown in FIGS. 12C and 12D, if the display magnification of at least one image 620 is changed according to the second user input, the electronic device 101 according to an embodiment of this document may automatically change the display magnification of at least one text 630 (e.g., without obtaining a user input) and display the same in order to display text having substantially the same size as the size of at least one text 630 included in the screen (e.g., the first execution screen 610) before adjusting the screen display magnification. Alternatively, according to another embodiment of this document, the electronic device 101 may maintain the display magnification of at least one text 630. In this case, at least one text 630 according to an embodiment of this document may be displayed to have a size substantially less than the size of at least one text 630 included in the screen (e.g., the first execution screen 610) before adjusting the screen display magnification. If a user input to the second button 816 (e.g. "apply") is obtained after user input to at least one of the first visual object (e.g., the second slide bar 1210) or the second visual object (e.g., the third slide bar 1220) is completed, the electronic device 101 according to an embodiment of this document, may determine the changed display magnification (e.g., image 70% and text 120%) as a representative display magnification (e.g., optimization 100%).

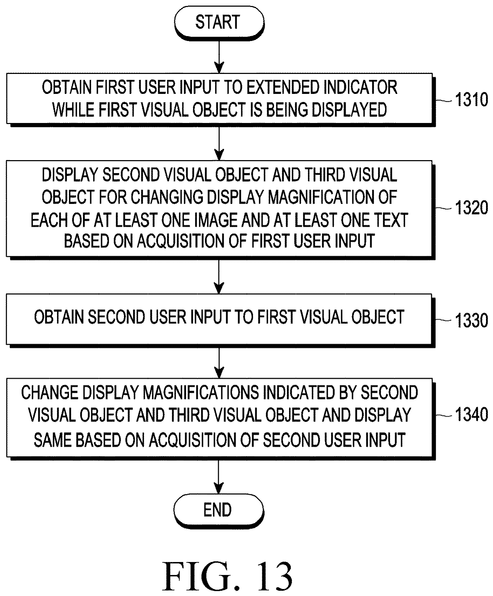

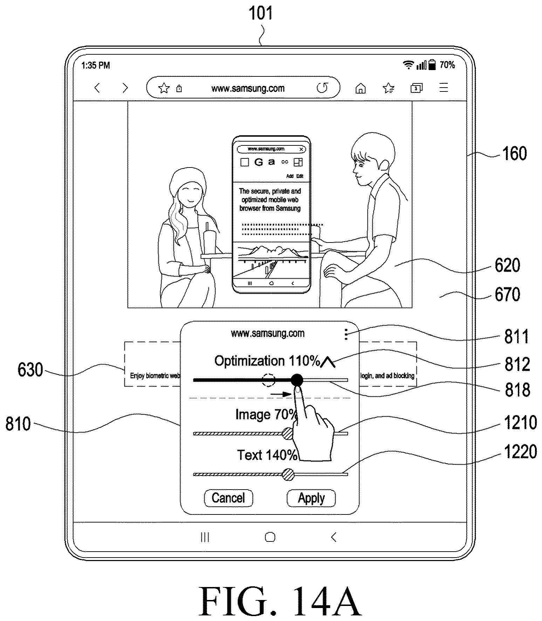

FIG. 13 is an exemplary diagram illustrating a function or operation of changing display magnification of an image and text and displaying the same according to a user input to a visual object (e.g., the first slide bar 818) for configuring web page display information according to an embodiment of this document. FIGS. 14A to 14C are exemplary diagrams illustrating the function or operation described in relation to FIG. 13 in terms of a user interface.

Referring to FIGS. 12A, 13, and 14A to 14C, the electronic device 101 according to an embodiment of this document may obtain a first user input to the indicator 812 while a first visual object (e.g., a first slide bar 818) is being displayed in operation 1310. As shown in FIG. 12A, the electronic device 101 according to an embodiment of this document may obtain a user's touch input to the indicator 812.

In operation 1320, the electronic device 101 according to an embodiment of this document may display a second visual object (e.g., a second slide bar 1210) and a third visual object (e.g., a third slide bar 1220) for changing the display magnification of each of at least one image 620 and at least one text 630, based on the acquisition of the first user input. The second visual object (e.g., the second slide bar 1210) and the third visual object (e.g., the third slide bar 1220) according to an embodiment of this document may be displayed in the extended pop-up window 818 so as to indicate a display magnification (e.g., image 70% and text 140%) specified to each of at least one image 620 and at least one text 630, compared to the representative display magnification (e.g., 100%).

In operation 1330, the electronic device 101 according to an embodiment of this document may obtain a second user input to the first visual object. As shown in FIG. 14A, the electronic device 101 according to an embodiment of this document may obtain a user input (e.g., a drag input) to the first visual object (e.g., the first slide bar 818) while the second visual object (e.g., the second slide bar 1210) and the third visual object (e.g., the third slide bar 1220) are being displayed in the extended pop-up window 810.

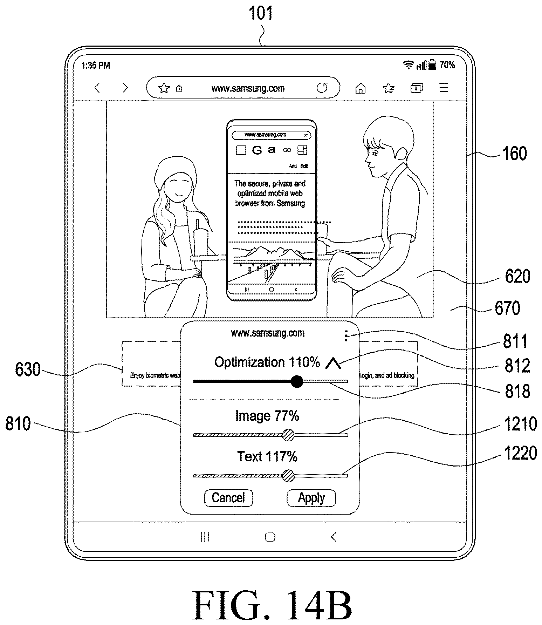

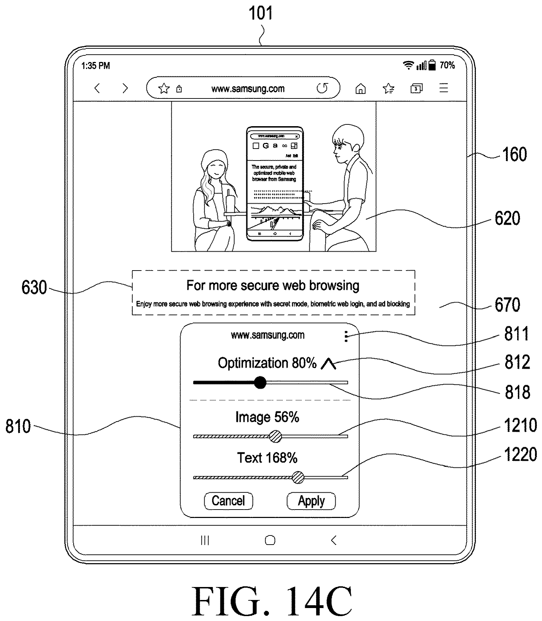

In operation 1340, the electronic device 101 according to an embodiment of this document, based on the acquisition of the second user input, may change the display magnifications indicated by the second visual object (e.g., the second slide bar 1210) and the third visual object (e.g., the third slide bar 1220) and display the same. As shown in FIG. 14B, if a user input for increasing the representative display magnification by 10% (e.g., changing the display magnification indicated by the first slide bar 818 to 110%) is obtained, the electronic device 101 according to an embodiment of this document may (e.g. may automatically) adjust the display magnifications indicated by the second visual object (e.g., the second slide bar 1210) and the third visual object (e.g., the third slide bar 1220) to 77% and 117%, respectively, and display the same. The electronic device 101 according to an embodiment of this document may obtain a user input to a second button 816 in the state in which the display magnifications indicated by the second visual object (e.g., the second slide bar 1210) and the third visual object (e.g., the third slide bar 1220) are specified as 77% and 117%, respectively. Based on the user input to the second button 816, the electronic device 101 according to an embodiment of this document may specify a representative display magnification of the current domain as 110%. As shown in FIG. 14C, if a user input for reducing the representative display magnification by 20% (e.g., changing the display magnification indicated by the first slide bar 818 to 80%) is obtained, the electronic device 101 according to an embodiment of this document may (e.g. automatically) adjust the display magnifications indicated by the second visual object (e.g., the second slide bar 1210) and the third visual object (e.g., the third slide bar 1220) to 56% and 168%, respectively, and display the same. The electronic device 101 according to an embodiment of this document may obtain a user input to the second button 816 in the state in which the display magnifications indicated by the second visual object (e.g., the second slide bar 1210) and the third visual object (e.g., the third slide bar 1220) are specified as 56% and 168%, respectively. Based on the user input to the second button 816, the electronic device 101 according to an embodiment of this document may specify a representative display magnification of the current domain as 80%. According to an embodiment of this document, the size of the area where at least one text 630 is displayed may increase or decrease as the size of at least one image 620 increases or decreases.

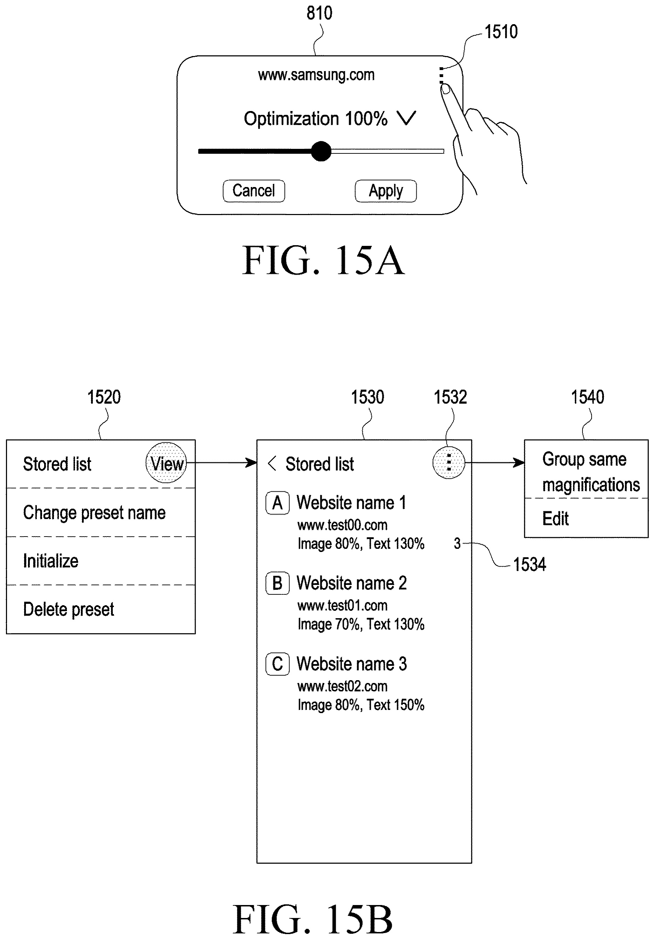

FIGS. 15A to 15C are exemplary diagrams illustrating various embodiments in which a pop-up window 810 is controlled according to a user input according to an embodiment of this document.

Referring to FIGS. 15A to 15C, the electronic device 101 according to an embodiment of this document, as shown in FIG. 15A, may obtain a user input (e.g., a touch input) to a first option indicator 811 included in the pop-up window 810. Based on the user input (e.g., a touch input) to the first option indicator 811, the electronic device 101 according to an embodiment of this document may display a screen (e.g., a first menu screen 1520) including at least one control menu as shown in FIG. 15B. The first menu screen 1520 according to an embodiment of this document may include at least one of a first menu (e.g., "View stored list") for displaying web page display information stored in the electronic device 101, a second menu (e.g., "Change preset name") for changing the name of web page display information, a third menu (e.g., "Initialize") for configuring the representative display magnification for a specific domain as 100%, and a fourth menu (e.g., "Delete preset") for completely deleting the stored web page display information for a specific domain. As shown in FIG. 15B, the electronic device 101 according to an embodiment of this document may obtain a user input to the first menu (e.g., "View stored list"). Based on the user input to the first menu (e.g., "View stored list"), the electronic device 101 according to an embodiment of this document may display a screen (e.g., a first preset screen 1530) including a list of at least one piece (or item) of web page display information stored for a specific domain. The first preset screen 1530 according to an embodiment of this document may include at least one of a second option indicator 1532 for displaying a window (e.g., a first window 1540) including at least one of a fourth menu (e.g., "Group same magnifications") for grouping same magnifications and displaying a specific domain and a fifth menu (e.g., "Edit") for editing a list, and the number 1534 of pieces of web page display information specified for a subdomain (e.g., www.test00.com/video) of a specific domain (e.g. www.test00.com). Although FIG. 15B illustrates information about display magnification for an image and text as web page display information of a specific domain (e.g., www.test00.com), according to another embodiment of this document, representative display information (e.g., optimization 100%) may be displayed instead of the information about the display magnification of an image and text.

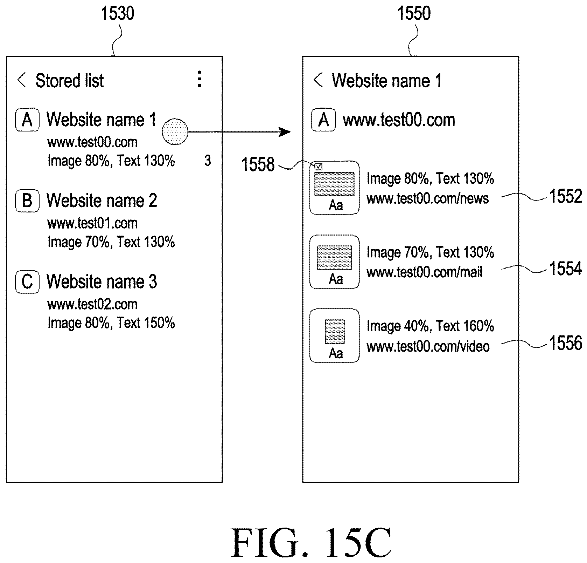

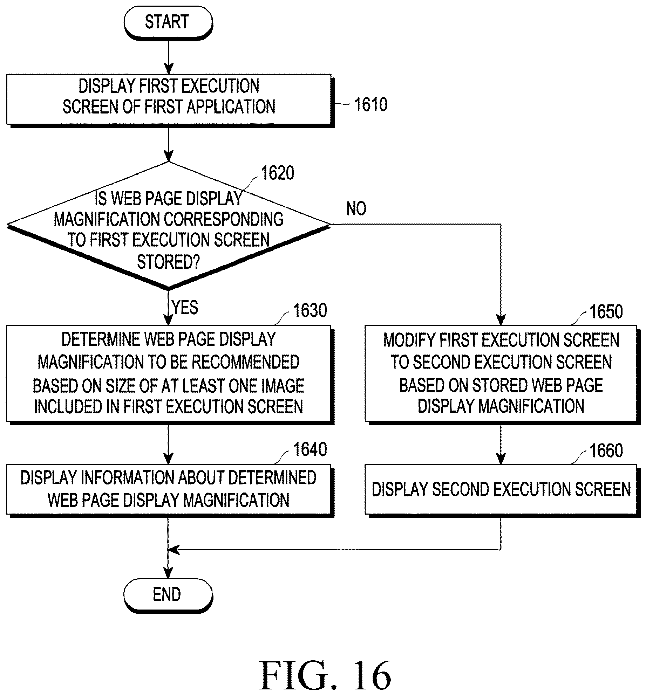

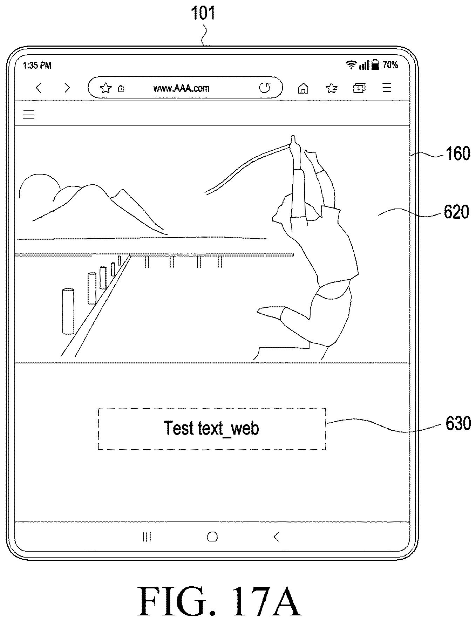

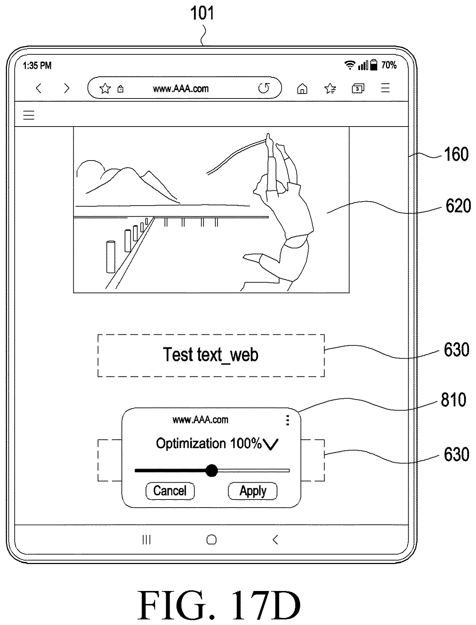

Referring to FIG. 15C, the electronic device 101 according to an embodiment of this document may obtain a user input of selecting one item of at least one list included in the first preset screen 1530. Based on the user input of selecting one item of at least one list included in the first preset screen 1530, the electronic device 101 according to an embodiment of this document may display a screen (e.g., a second preset screen 1550) including information about web page display magnifications specified for subdomains (e.g., a first subdomain 1552, a second subdomain 1554, and a third subdomain 1556) of a specific domain (e.g., www.test00.com). According to a selection input to any one list included in the second preset screen 1550, the electronic device 101 according to an embodiment of this document may display a screen corresponding to a corresponding subdomain at a specified display magnification. In the case where a selection input to any one list included in the second preset screen 1550 is performed, the electronic device 101 according to an embodiment of this document may determine web page display information corresponding to the selected subdomain (e.g., the first subdomain 1552) as representative web page display information (e.g., "image 80% and text 130%" displayed on the first preset screen 1530). FIG. 15C illustrates embodiment in which an object 1558 representing that web page display information corresponding to the selected subdomain (e.g., the first subdomain 1552) is configured as representative web page display information is displayed around the information about the first subdomain 1552 by way of example. FIG. 16 is an exemplary diagram illustrating a function or operation in which an electronic device 101 displays a current web page according to pre-stored configuration information according to an embodiment of this document. FIGS. 17A to 17D are exemplary diagrams illustrating the function or operation described in relation to FIG. 16 in terms of a user interface.

Referring to FIGS. 16 and 17A to 17D, in operation 1610, the electronic device 101 according to an embodiment of this document may display a first execution screen (e.g., a fifth execution screen 1710) of a first application (e.g., an internet application). As shown in FIG. 17A, the fifth execution screen 1710 according to an embodiment of this document may include at least one of at least one image 620 and at least one text 630 corresponding to a specific domain (e.g., www.AAA.com).

In operation 1620, the electronic device 101 according to an embodiment of this document may determine whether or not a web page display magnification corresponding to the first execution screen (e.g., the fifth execution screen 1710) is stored.

In operation 1630, if it is determined that the web page display magnification corresponding to the first execution screen (e.g., the fifth execution screen 1710) is not stored, the electronic device 101 according to an embodiment of this document determines, may determine a web page display magnification to be recommended, based on the size of at least one image 620 included in the first execution screen (e.g., the fifth execution screen 1710). The electronic device 101 according to an embodiment of this document may compare the size of at least one image 620 included in a specific domain stored in the electronic device 101 (e.g., the size of an image before applying web page display magnification) with the size of at least one image 620 included in the fifth execution screen 1710, based on a horizontal length or a vertical length of the at least one image 620. For example, in the case of an image having a horizontal length greater than a vertical length, the electronic device 101 according to an embodiment of this document may compare the size of the image, based on the horizontal length. On the other hand, in the case of an image having a vertical length greater than a horizontal length, the electronic device 101 according to an embodiment of this document may compare the size of the image, based on the vertical length. As a result of the comparison, the electronic device 101 according to an embodiment of this document may determine a display magnification applied to a web page having a horizontal length or vertical length most similar to at least one image 620 included in the fifth execution screen 1710 as a display magnification to be recommended. Alternatively, according to another embodiment of this document, a web page display magnification for a web page with the highest access frequency may be determined as a display magnification to be recommended.

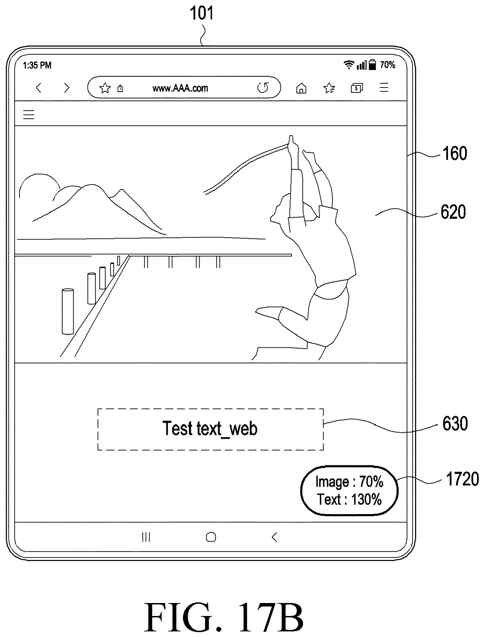

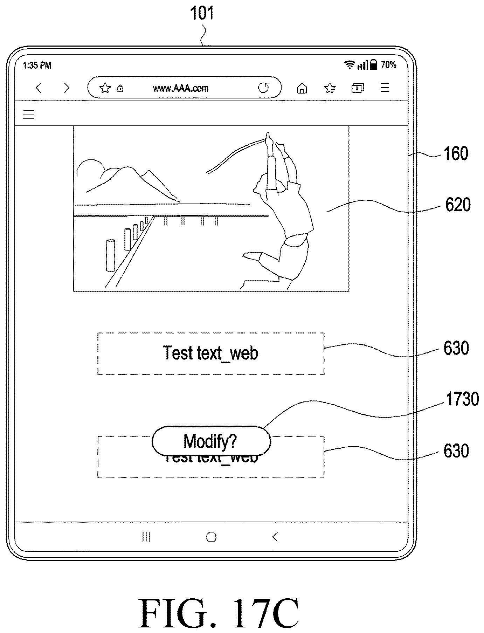

In operation 1640, the electronic device 101 according to an embodiment of this document may display information about the web page display magnification determined in operation 1630. The electronic device 101 according to an embodiment of this document may display a recommended display magnification 1720 as shown in FIG. 17B. The electronic device 101 according to an embodiment of this document may obtain a user input (e.g., a touch input) to the recommended display magnification 1720. Based on obtaining a user input (e.g., a touch input) to the recommended display magnification 1720, the electronic device 101 according to an embodiment of this document, as shown in FIG. 17C, may display a visual object (e.g., a fourth visual object 1730) asking the user whether modification of the recommended display magnification 1720 is necessary (e.g., for displaying a pop-up window 810). The electronic device 101 according to an embodiment of this document may display a pop-up window 810, based on a user input to the fourth visual object 1730. The electronic device 101 according to an embodiment of this document may change the display magnification of the web page according to the user input to the pop-up window 810 and display the same. The visual object (e.g., the fourth visual object 1730) according to an embodiment of this document may not be displayed after a specified time (e.g., 5 seconds) elapses.

In operation 1650, if it is determined that the web page display magnification corresponding to the first execution screen (e.g., the fifth execution screen 1710) is stored, the electronic device 101 according to an embodiment of this document may modify the first execution screen to a second execution screen, based on the stored web page display magnification. The electronic device 101 according to an embodiment of this document may display the second execution screen in operation 1660.

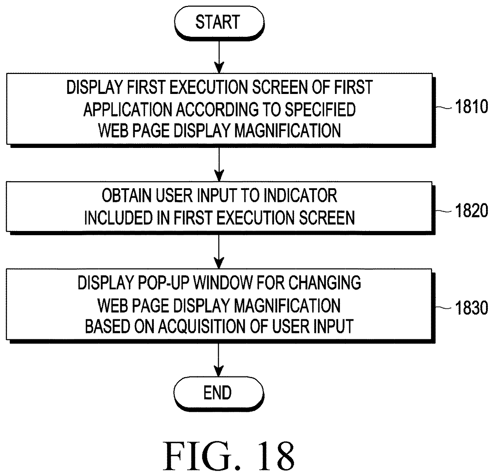

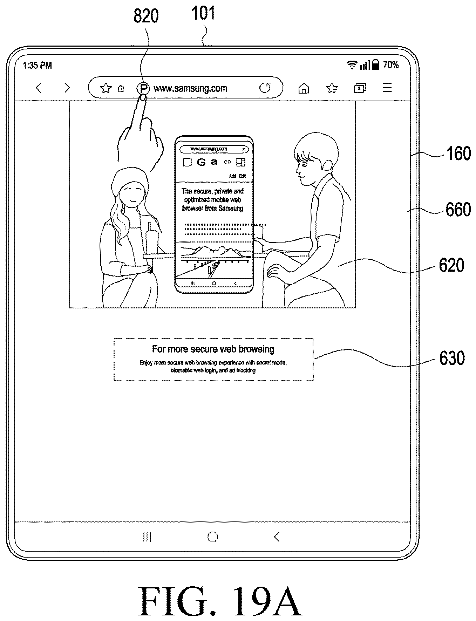

FIG. 18 is an exemplary diagram illustrating a function or operation in which an electronic device 101 displays a pop-up window 810 according to a user's selection input to an indicator 820 according to an embodiment of this document. FIGS. 19A to 19C are exemplary diagrams illustrating the function or operation described in relation to FIG. 18 in terms of a user interface.

Referring to FIGS. 18 and 19A to 19C, in operation 1810, the electronic device 101 according to an embodiment of this document may display a first execution screen (e.g., a web page corresponding to the domain www.samsung.com) of a first application (e.g., an internet application) according to a specified web page display magnification (e.g., image 70% and text 140%). The first execution screen (e.g., a web page corresponding to the domain www.samsung.com) according to an embodiment of this document may include an indicator 820 as shown in FIG. 19A. In an example, this indicator 820 may be shown in the address bar, as shown in Figure 19A. However, in other examples, indicator 820 may be elsewhere provided on the first execution screen.

In operation 1820, the electronic device 101 according to an embodiment of this document may obtain a user input to the indicator 820 included in the first execution screen (e.g., a web page corresponding to the domain www.samsung.com). The electronic device 101 according to an embodiment of this document may obtain a touch input to the indicator 820 as shown in FIG. 19A.

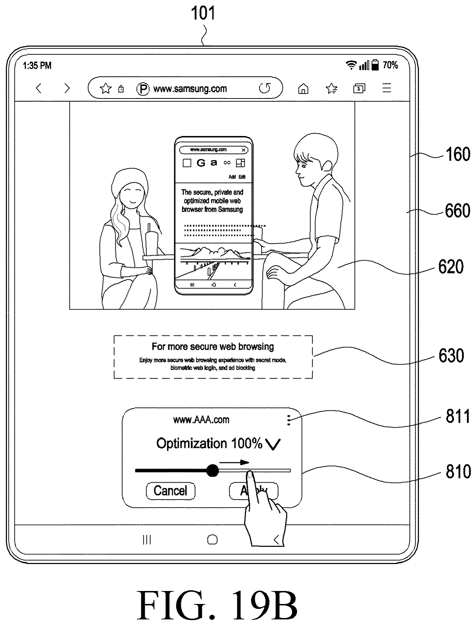

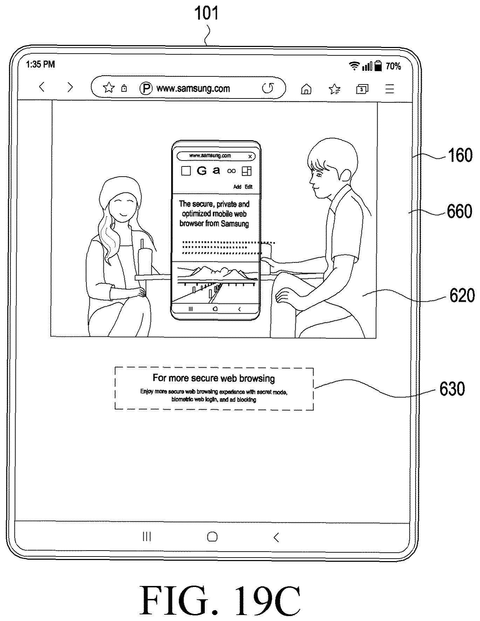

In operation 1830, the electronic device 101 according to an embodiment of this document, based on obtaining a user input in operation 1820, may display a pop-up window 810 for changing the web page display magnification. The electronic device 101 according to an embodiment of this document may obtain a user input to the pop-up window 810 as shown in FIG. 19B. The electronic device 101 according to an embodiment of this document, based on obtaining the user input to the pop-up window 810, may display a second execution screen of the first application having a changed web page display magnification as shown in FIG. 19C.

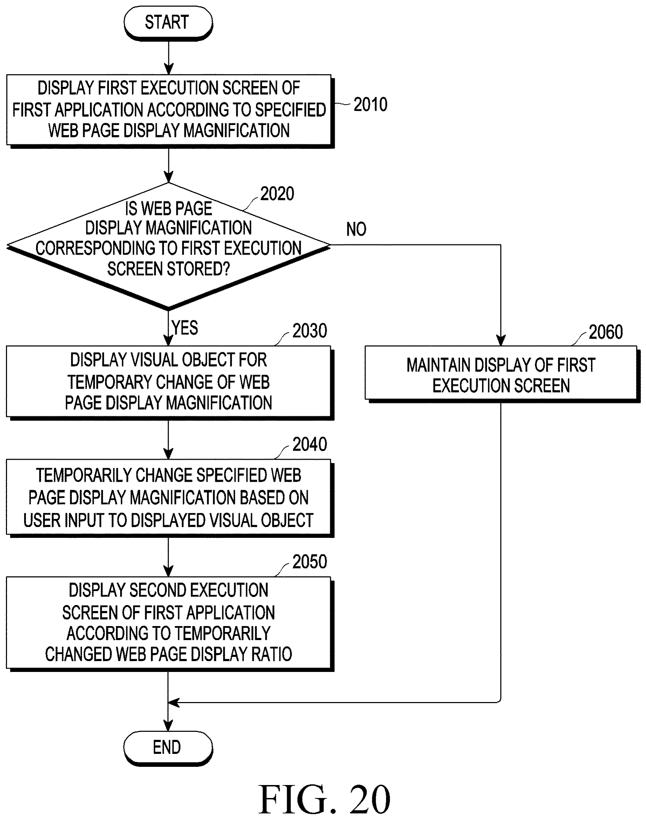

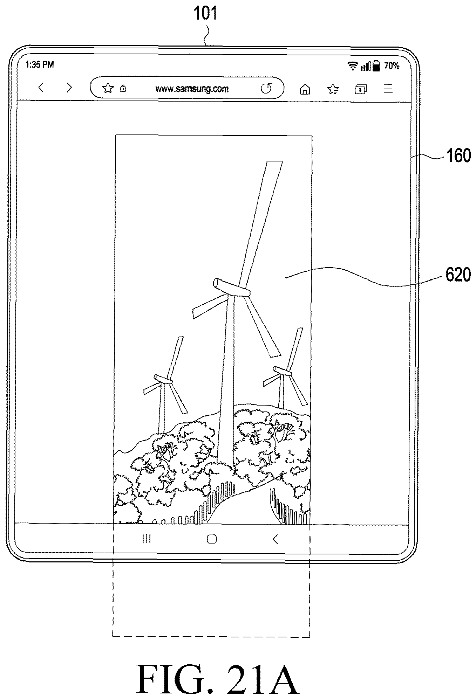

FIG. 20 is an exemplary diagram illustrating a function or operation of at least temporarily changing web page display information and displaying a web page according to an embodiment of this document. FIGS. 21A to 21C are exemplary diagrams illustrating the function or operation described in relation to FIG. 20 in terms of a user interface.

Referring to FIGS. 20 and 21A to 21C, the electronic device 101 according to an embodiment of this document, in operation 2010, may display a first execution screen (e.g., a web page corresponding to the domain www.samsung.com) of a first application (e.g., internet application) according to a specified web page display magnification (e.g., image 70% and text 140%). The first execution screen (e.g., a web page corresponding to the domain www.samsung.com) according to an embodiment of this document may include an indicator 820 as shown in FIG. 21A.

In operation 2020, the electronic device 101 according to an embodiment of this document may determine whether or not the size (e.g., vertical length) of at least one image 620 included in the first execution screen exceeds a display area (e.g., a display area of the display module 160). The size of at least one image 620 according to an embodiment of this document may exceed the display area (e.g., the display area of the display module 160) even though the web page display magnification is applied thereto.

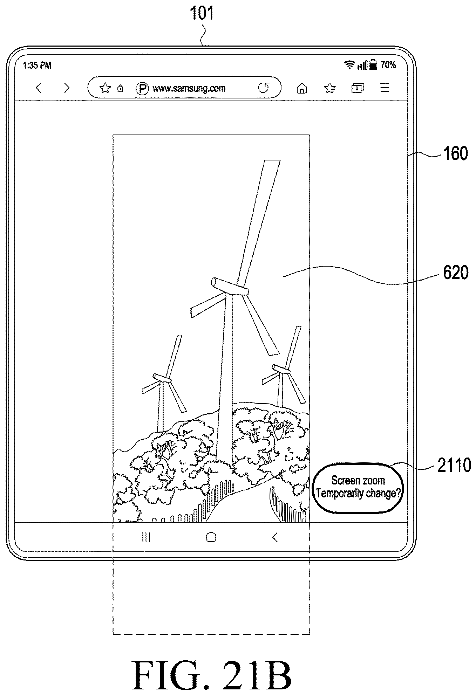

If the size (e.g., vertical length) of at least one image 620 included in the first execution screen exceeds the display area (e.g., the display area of the display module 160), the electronic device 101 according to an embodiment of this document, in operation 2030, may display a visual object (e.g., a sixth visual object 2110) for temporary change of the display magnification of the web page. As shown in FIG. 21B, the electronic device 101 according to an embodiment of this document may display a visual object (e.g., a sixth visual object 2110) for temporary change of the display magnification of the web page on the first execution screen.

In operation 2040, the electronic device 101 according to an embodiment of this document, based on a user input (e.g., a touch input) to the displayed visual object (e.g., the sixth visual object 2110), may temporarily change the specified web page display magnification (e.g., image 70% and text 140%). The electronic device 101 according to an embodiment of this document, based on information about a web page display ratio specified for a subdomain of a currently displayed web page or information about another web page display ratio stored in the electronic device 101, may change the display ratio of the currently displayed web page (e.g., image 70% and text 140%) to another web page display ratio (e.g., image 56% and text 156%). According to an embodiment of this document, if the information about another web page display ratio is not stored in the electronic device 101, the display ratio for web content (e.g., at least one image 620) included in the current web page may be determined according to a ratio reduced by a predetermined ratio (e.g., 30%). According to an embodiment of this document, the temporarily changed web page display ratio (e.g., image 56% and text 156%) may be applied only to the domain (e.g., www.samsung.com/news) corresponding to the current web page. In other words, according to an embodiment of this document, the temporarily changed web page display ratio (e.g., image 56% and text 156%) may not be applied to the domain (e.g., www.samsung.com/video) corresponding to another web page currently being displayed.

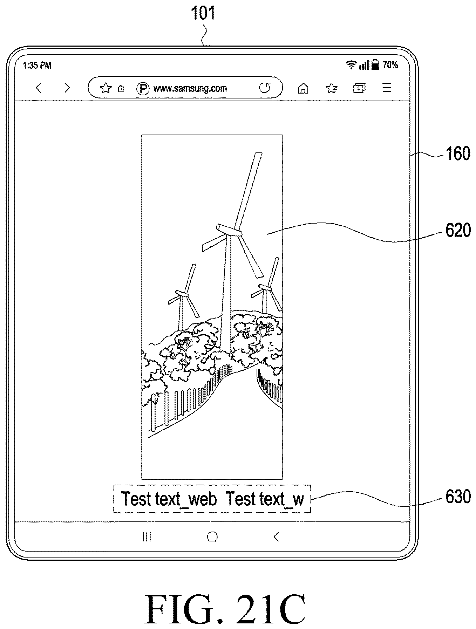

In operation 2050, the electronic device 101 according to an embodiment of this document may display a second execution screen of the first application according to the web page display ratio temporarily changed in operation 2040. As shown in FIG. 21C, the electronic device 101 according to an embodiment of this document may display the web page according to the changed web page display ratio (e.g., image 56% and text 156%). In operation 2060, if the size (e.g., vertical length) of at least one image 620 included in the first execution screen does not exceed the display area (e.g., the display area of the display module 160), the electronic device 101 according to an embodiment of this document may maintain the display of the first execution screen.

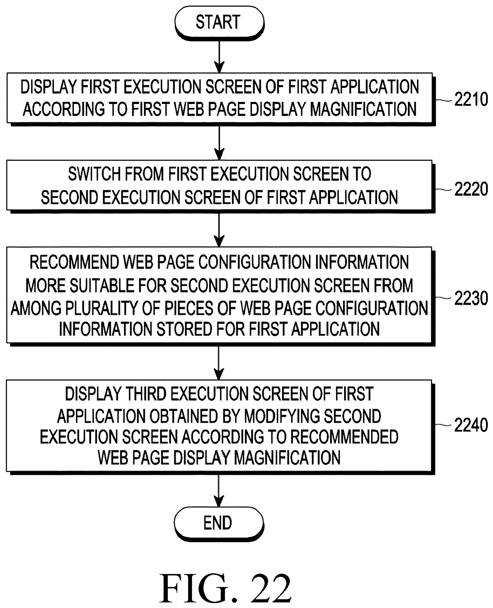

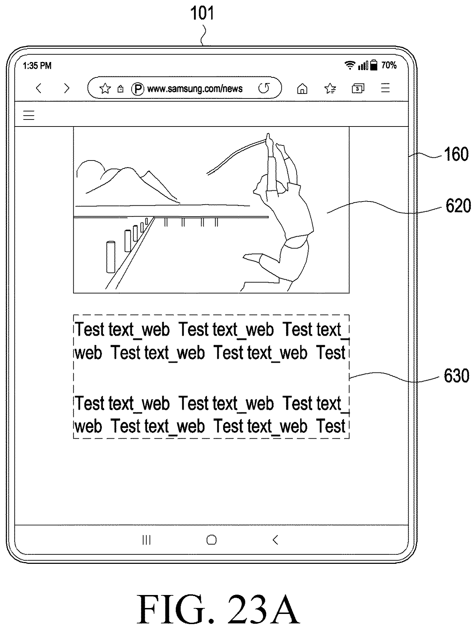

FIG. 22 is an exemplary diagram illustrating a function or operation of recommending a display magnification more suitable for a current web page from among a plurality of display magnifications according to an embodiment of this document. FIGS. 23A to 23C are exemplary diagrams illustrating the function or operation described in relation to FIG. 22 in terms of a user interface.

Referring to FIGS. 22 and 23A to 23C, the electronic device 101 according to an embodiment of this document, in operation 2210, may display a first execution screen (e.g., the third execution screen 670) of a first application (e.g., an internet application) according to a first web page display magnification (e.g., image 70% and text 140%). As shown in FIG. 23A, the electronic device 101 according to an embodiment of this document may display a first execution screen (e.g., the third execution screen 670) of a first application (e.g., an internet application) according to a first web page display magnification (e.g., image 70% and text 140%).

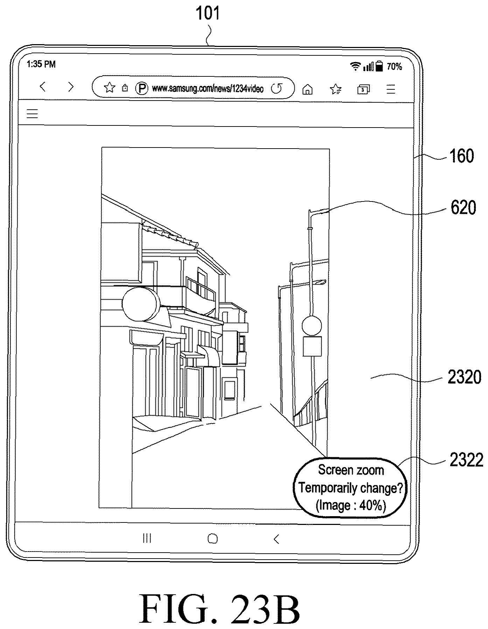

In operation 2220, the electronic device 101 according to an embodiment of this document may switch from the first execution screen to a second execution screen (e.g., a sixth execution screen 2320) of the first application. As shown in FIG. 23B, the electronic device 101 according to an embodiment of this document may switch from a web page corresponding to a first domain (e.g., www.samsung.com/news) to a web page corresponding to a second domain (e.g., www.samsung.com/news/1234video). The electronic device 101 according to an embodiment of this document may switch to a web page corresponding to the second domain (e.g., www.samsung.com/news/1234video) according to a user input to a web page corresponding to the first domain (e.g., www.samsung.com/news).

In operation 2230, the electronic device 101 according to an embodiment of this document may recommend web page configuration information more suitable for the second execution screen from among a plurality of pieces of web page configuration information stored for the first application. As shown in FIG. 23B, if at least one image 620 occupies most of the display area of a touch screen display (e.g., the display module 160), the electronic device 101 according to an embodiment of this document, may recommend web page configuration information more suitable for the second execution screen from among a plurality of pieces of web page configuration information stored for the first application. The electronic device 101 according to an embodiment of this document may compare a horizontal length or vertical length of at least one image 620 with a horizontal length or vertical length of the display area of the touch screen display (e.g., the display module 160). Based on the comparison result, the electronic device 101 according to an embodiment of this document may determine whether or not at least one image 620 occupies most of the display area of the touch screen display (e.g., the display module 160). If web page configuration information (e.g., image 56% and text 156%) more suitable for the second execution screen is identified from among the plurality of pieces of web page configuration information stored for the first application (e.g., in the case where at least one text 620 included in the web page is displayed due to change of the display magnification of the web page), the electronic device 101 according to an embodiment of this document may display a visual object (e.g., a seventh visual object 2322) for temporarily changing the web page display ratio (e.g., applied only to the currently displayed tab), as shown in FIG. 23B.

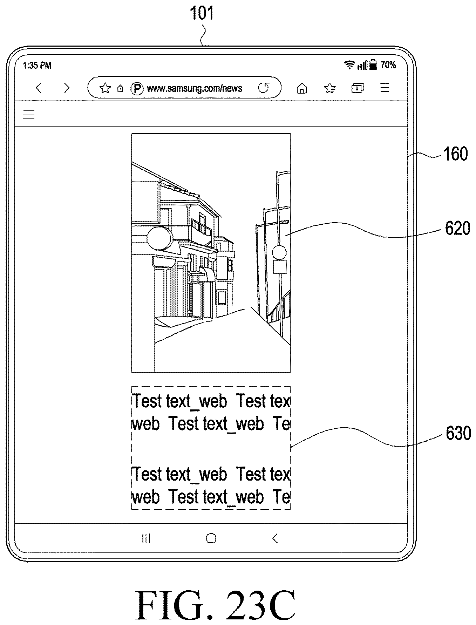

In operation 2240, the electronic device 101 according to an embodiment of this document may display a third execution screen of the first application obtained by modifying the second execution screen according to the web page display magnification recommended in operation 2230. The electronic device 101 according to an embodiment of this document may obtain a user input (e.g., a touch input) to the visual object (e.g., the seventh visual object 2322). Based on obtaining the user input (e.g., a touch input) to the visual object (e.g., the seventh visual object 2322), the electronic device 101 according to an embodiment of this document, as shown in FIG. 23C, may display a third execution screen of the first application obtained by modifying the second execution screen according to the recommended web page display magnification.

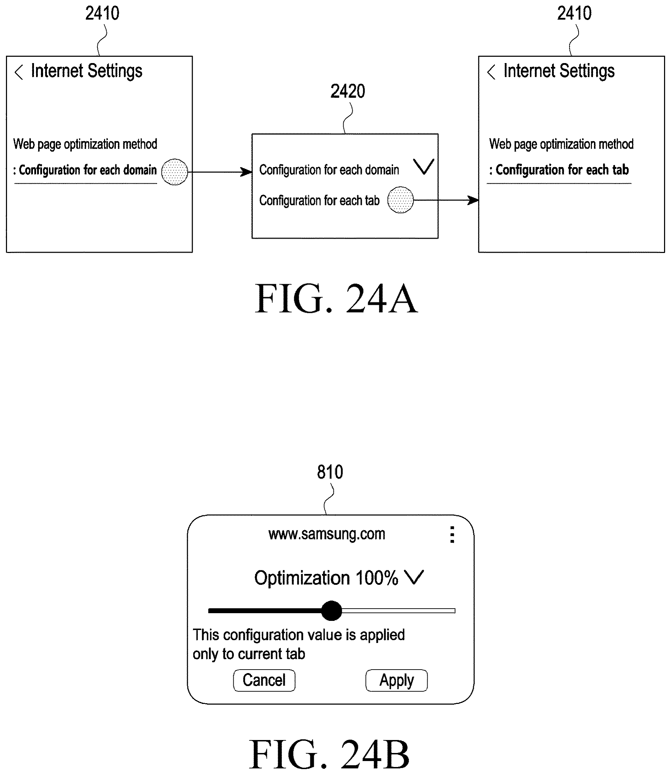

FIGS. 24A and 24B are exemplary diagrams illustrating a function or operation of configuring a web page optimization method for each tab according to an embodiment of this document.

Referring to FIGS. 24A and 24B, the electronic device 101 according to an embodiment of this document may obtain a user input for changing a web page optimization method from "Configure for each domain" to "Configure for each tab" in a configuring screen 2410 of a first application (e.g., an internet application). The term "tab" mentioned in this document may indicate at least one web page corresponding to a specific domain. If the web page optimization method is changed from "Configure for each domain" to "Configure for each tab", the electronic device 101 according to an embodiment of this document may display a notification message indicating that the web page optimization method is applied only to the current tab on the pop-up window 810 as shown in FIG. 24B.

The various embodiments mentioned in this document may be performed based on an image having the largest horizontal length or vertical length among currently loaded images in the case where a specific web page includes a plurality of images. Alternatively, the various embodiments mentioned in this document may be performed based on an average length of horizontal or vertical lengths of some images among a plurality of currently loaded images. In this case, an image having horizontal or vertical length less than those of the image having the largest horizontal or vertical length by a specified ratio (e.g., 50%) may be excluded from the image that is the standard for applying the various embodiments mentioned in this document.

An electronic device according to an embodiment of this document may include a touch screen display (e.g., the display module 160), a communication circuit (e.g., the communication module 190), and at least one processor (e.g., the processor 120), wherein the at least one processor may be configured to display a first execution screen of a first application according to a first magnification on the touch screen display, obtain a user input to the electronic device while the first execution screen is being displayed on the touch screen display, obtain, based on obtaining the user input, information about a second execution screen of the first application, which is changed to a second magnification, from an external electronic device operatively connected to the electronic device through the communication circuit, and display, based on the second execution screen including at least one text, through the touch screen display, a third execution screen in which a display magnification of the at least one text is adjusted such that the size of the at least one text is substantially the same as the size of text based on the first magnification.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", *"coupled to", "connected with",* or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities, and some of the multiple entities may be separately disposed in different components. According to an embodiment of the disclosure, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

As described, according to an embodiment, an electronic device comprises: a touch screen display; a communication circuit; and at least one processor, wherein the at least one processor is configured to: display a first execution screen of a first application according to a first magnification on the touch screen display; obtain a user input to the electronic device while the first execution screen is being displayed on the touch screen display; based on obtaining the user input, obtain information about a second execution screen of the first application, which is changed to a second magnification, from an external electronic device operatively connected to the electronic device through the communication circuit; and display, based on the second execution screen including at least one text, through the touch screen display, a third execution screen in which a display magnification of the at least one text is adjusted such that the size of the at least one text is substantially the same as the size of text based on the first magnification.

For example, the at least one processor is further configured to display a first visual object for change from the first execution screen to the third execution screen, based on the size of at least one image included in the first execution screen, through the touch screen display.

For example, the at least one processor is further configured to display a pop-up window for determining a display magnification for at least one image or at least one text included in the third execution screen through the touch screen display.

For example, the at least one processor is further configured to: obtain a configuration value for display magnification from a user through the pop-up window; and based on obtaining the configuration value, increase or reduce the size of the at least one text, based on a change in the size of the at least one image.

For example, the at least one processor is further configured to provide information about a recommended display magnification, based on the size of at least one image included in the first execution screen, through the touch screen display.

For example, the third execution screen comprises a first indicator indicating that the size of the at least one image or the at least one text has been changed.

For example, the at least one processor is further configured to: determine whether or not the at least one image exceeds a display area of the touch screen display on the third execution screen; and in case that the at least one image exceeds the display area of the touch screen display, provide a second visual object for at least temporarily changing the display magnification of the at least one image through the touch screen display.

For example, the first application comprises an internet application, and a display magnification for the third execution screen is specified differently for each domain executable by the internet application.

For example, the at least one processor is further configured to, in case that the first execution screen comprises a plurality of images, determine whether or not to display the first visual object, based on any one image having the largest horizontal or vertical length among the plurality of images.

For example, the configuration information for the third execution screen is specified for each tab of the internet application.

As described, a method of controlling an electronic device, comprises: displaying a first execution screen of a first application according to a first magnification on a touch screen display of the electronic device; obtaining a user input to the electronic device while the first execution screen is being displayed on the touch screen display; based on obtaining the user input, obtaining information about a second execution screen of the first application, which is changed to a second magnification, from an external electronic device operatively connected to the electronic device through a communication circuit of the electronic device; and displaying, based on the second execution screen including at least one text, through the touch screen display, a third execution screen in which a display magnification of the at least one text is adjusted such that the size of the at least one text is substantially the same as the size of text based on the first magnification.

For example, the method further comprises displaying a first visual object for change from the first execution screen to the third execution screen, based on the size of at least one image included in the first execution screen, through the touch screen display.

For example, the method further comprises displaying a pop-up window for determining a display magnification for at least one image or at least one text included in the third execution screen through the touch screen display.

For example, the method further comprises obtaining a configuration value for display magnification from a user through the pop-up window; and based on obtaining the configuration value, increasing or reducing the size of the at least one text, based on a change in the size of the at least one image.

For example, the method further comprises providing information about a recommended display magnification, based on the size of at least one image included in the first execution screen, through the touch screen display.

For example, the method further comprises wherein the third execution screen comprises a first indicator indicating that the size of the at least one image or the at least one text has been changed.

For example, the method further comprises determining whether or not the at least one image exceeds a display area of the touch screen display on the third execution screen; and in case that the at least one image exceeds the display area of the touch screen display, providing a second visual object for at least temporarily changing the display magnification of the at least one image through the touch screen display.

For example, the method further comprises wherein the first application comprises an internet application, and a display magnification for the third execution screen is specified differently for each domain executable by the internet application.

For example, the method further comprising, in case that the first execution screen comprises a plurality of images, determining whether or not to display the first visual object, based on any one image having the largest horizontal or vertical length among the plurality of images.

For example, the method further comprising, wherein the configuration information for the third execution screen is specified for each tab of the internet application.

It will be appreciated that any of the above-described embodiments, and their technical features (individually and/or in combination), may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device comprising:
a touch screen display;
a communication circuit; and
at least one processor,
wherein the at least one processor is configured to:
display a first execution screen of a first application according to a first magnification on the touch screen display, the first execution screen comprising at least one image and at least one text;
obtain a user input to the electronic device while the first execution screen is being displayed on the touch screen display;
based on obtaining the user input, obtain information about a second execution screen of the first application, wherein the second execution screen corresponds to the first execution screen changed to a second magnification from the first magnification, from an external electronic device operatively connected to the electronic device through the communication circuit; and
display through the touch screen display, a third execution screen that corresponds to the second execution screen in which a display magnification of at least one of the at least one image and at least one text is adjusted from the second magnification.

2. The electronic device of claim 1, wherein the at least one processor is configured to:
display the third execution screen such that a size of the at least one text is adjusted from the second magnification so as to be substantially the same as the size of text based on the first magnification.

3. The electronic device of claim 1 or 2, wherein the at least one processor is further configured to display a first visual object, and
based on receiving the user input to the first visual object, control to change from the first execution screen to the third execution screen, based on a size of the at least one image included in the first execution screen,.

4. The electronic device of claim 3, wherein the at least one processor is further configured to, in case that the first execution screen comprises a plurality of images, determine whether or not to display the first visual object, based on any one image having the largest horizontal or vertical length among the plurality of images.

5. The electronic device of claim 1 to 4, wherein the at least one processor is further configured to:
display a pop-up window for determining a display magnification for at least one image or at least one text included in the third execution screen through the touch screen display.

6. The electronic device of any one of claims 1 to 5, wherein the at least one processor is further configured to:
obtain a configuration value for display magnification from a user through the pop-up window; and
based on obtaining the configuration value, increase or reduce the size of the at least one text, based on a change in the size of the at least one image.

7. The electronic device of any one of claims 1 to 6, wherein the at least one processor is further configured to:
determine whether or not the at least one image exceeds a display area of the touch screen display on the third execution screen; and
in case that the at least one image exceeds the display area of the touch screen display, provide a second visual object for at least temporarily changing the display magnification of the at least one image through the touch screen display.

8. The electronic device of any one of claims 1 to 7, wherein the first application comprises an internet application, and
a display magnification for the third execution screen is specified differently for each domain executable by the internet application; and/or
a display magnification for the third execution screen is specified for each tab of the internet application..

9. A method of controlling an electronic device, the method comprising:
displaying a first execution screen of a first application according to a first magnification on a touch screen display of the electronic device, the first execution screen comprising at least one image and at least one text;
obtaining a user input to the electronic device while the first execution screen is being displayed on the touch screen display;
based on obtaining the user input, obtaining information about a second execution screen of the first application, the second execution screen corresponds to the first execution screen changed a second magnification from the first magnification, from an external electronic device operatively connected to the electronic device through a communication circuit of the electronic device; and
displaying, , through the touch screen display, a third execution screen that corresponds to the second execution screen in which a display magnification of at least one of the at least one image and at least one text is adjusted from the second magnification.

10. The method of claim 9, further comprising:
displaying the third execution screen such that a size of the at least one text is adjusted from the second magnification so as to be substantially the same as the size of text based on the first magnification.

11. The method of claim 9 or 10, further comprising displaying a first visual object, and;
in response to receiving the user input to the first visual object, changing from the first execution screen to the third execution screen, based on the size of at least one image included in the first execution screen, through the touch screen display.

12. The method of claim 11, further comprising, in case that the first execution screen comprises a plurality of images, determining whether or not to display the first visual object, based on any one image having the largest horizontal or vertical length among the plurality of images.

13. The method of claim 9 to 12, further comprising displaying a pop-up window for determining a display magnification for at least one image or at least one text included in the third execution screen through the touch screen display; and
obtaining a configuration value for display magnification from a user through the pop-up window; and
based on obtaining the configuration value, increasing or reducing the size of the at least one text, based on a change in the size of the at least one image.

14. The method of one of claims 9 to 13, further comprising:
determining whether or not the at least one image exceeds a display area of the touch screen display on the third execution screen; and
in case that the at least one image exceeds the display area of the touch screen display, providing a second visual object for at least temporarily changing the display magnification of the at least one image through the touch screen display.

15. The method of one of claims 9 to 14, wherein the first application comprises an internet application, and the method further comprises:
specifying a display magnification for the third execution screen differently for each domain executable by the internet application; and/or
specifying a display magnification for the third execution screen for each tab of the internet application.
